(19) Europäisches Patentamt
European Patent Office
Office européen des brevets

(11) EP 4 332 509 B1

(12) **EUROPEAN PATENT SPECIFICATION**

(45) Date of publication and mention of the grant of the patent:
**10.06.2026 Bulletin 2026/24**

(21) Application number: **23185445.6**

(22) Date of filing: **14.07.2023**

(51) International Patent Classification (IPC):
***G01C 21/36*** *(2006.01)* ***G01C 21/00*** *(2006.01)*

(52) Cooperative Patent Classification (CPC):
**G01C 21/3804; G01C 21/3833; G01C 21/3841**

(54) **NAVIGATION INFORMATION**

NAVIGATIONSINFORMATIONEN

INFORMATIONS DE NAVIGATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.08.2022 GB 202212539**

(43) Date of publication of application:
**06.03.2024 Bulletin 2024/10**

(73) Proprietor: **Nokia Technologies Oy**
**02610 Espoo (FI)**

(72) Inventors:
- **ABDELAZIZ, Mohamed Khairy**
  **Oulu (FI)**
- **BENNIS, Mehdi**
  **Oulu (FI)**
- **ELBAMBY, Mohammed Saad**
  **Espoo (FI)**

(74) Representative: **Page White Farrer**
**Bedford House**
**21a John Street**
**London WC1N 2BF (GB)**

(56) References cited:
**US-A1- 2019 139 403**
**US-A1- 2019 220 003**
**US-A1- 2020 135 014**
**US-A1- 2022 198 262**
**US-B1- 10 794 710**

- **CHEN MINGZHE ET AL: "Distributed Learning in Wireless Networks: Recent Progress and Future Challenges", IEEE JOURNAL ON SELECTED AREAS IN COMMUNICATIONS, IEEE SERVICE CENTER, PISCATAWAY, US, vol. 39, no. 12, 6 October 2021 (2021-10-06), pages 3579 - 3605, XP011888889, ISSN: 0733-8716, [retrieved on 20211118], DOI: 10.1109/JSAC.2021.3118346**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 332 509 B1

## Description

## Field

The present disclosure relates to apparatuses, methods and computer program products for generating navigation information.

## Background

A moveable device can operate autonomously or semi-autonomously based on navigation information. An autonomous device can be configured to use real-time or almost real-time sensor data to achieve set objectives. The sensor data may be received from sensors provided in association with the device and/or from an external apparatus. Artificial intelligence can be utilized in generation of navigation information.

US20190220003A1 discloses a computer-assisted or autonomous driving (CA/AD) system. More particularly, for collaboratively constructing a 3-D view of an environment around a CA/AD vehicle a CA/AD a system controller is disposed in a first CA/AD vehicle, to manage a collaborative three-dimensional (3-D) map of an environment around the first CA/AD vehicle, wherein the system controller is to receive, from another CA/AD vehicle proximate to the first CA/AD vehicle, an indication of at least a portion of another 3-D map of another environment around both the first CA/AD vehicle and the other CA/AD vehicle and incorporate the at least the portion of the 3-D map proximate to the first CA/AD vehicle and the other CA/AD vehicle into the 3-D map of the environment of the first CA/AD vehicle managed by the system controller.

## Summary

A method in accordance with the invention is defined in claim 1. An apparatus and a computer program according to the invention are defined in claims 13 and 14, respectively.

According to an aspect, there is provided a method for generating information for navigation in an environment, comprising:

generating, by a device, state information about a part of the environment where the device is positioned,
receiving, by the device from at least one other device, messages comprising state information about a part of the environment where the at least one other device is positioned, the meaning of the messages being learned based on emergent communication,
abstracting the state space for the environment by an abstractor module based on the generated state information and the received state information messages to provide an abstracted state space, and
generating information for the device by a reinforcement learning module for navigation in the environment based on the abstracted state space and further state information generated by the device and received from the at least one other device.

In accordance with a more detailed aspect state information comprises local observations by the device, position of the device and messages from a previous time slot. The state information may comprise sensory information. The state information may comprise sensory information generated by an imaging device.

In accordance with an aspect the method comprises feeding the emerging communication messages into the abstractor module and taking the emerging communication messages into account in the abstracting.

Training of emergent communication may start with exchange of messages randomly selected from a predefined number of available messages.

A method may comprise learning how to partition the search space into different categories and assign the messages into the categories.

A method may comprise selecting a message based on at least one of: local observation, position or a message from a previous iteration step.

A method may be provided where the abstractor module and the reinforcement learning module are trained in parallel.

Local observations may be described by a tree structure. The tree structure may comprise a quadtree for two-dimensional environment. An octree may be used for three-dimensional environment.

In accordance with a detailed aspect a method is provided that comprises: input to the abstractor module of a feature matrix, an adjacency matrix, current position of the device, and at least one message from at least one other device, generating an abstracted feature matrix and an abstracted adjacency matrix, and input of the abstracted matrices into the reinforcement learning module.

Abstracting of state space may comprise local embedding of state information.

Abstracting of state space may comprise receiving a graph structure representing a local observation of the entire state space, modelling the graph structure based on feature vectors for a device to learn a representation vector of the entire graph structure.

In accordance with an aspect there is provided apparatus for generating information for navigation in an environment, comprising:

means for generating state information about a part of the environment where a device is positioned,
means for receiving from at least one other device messages comprising state information about a part of the environment where the at least one other device is positioned, the meaning of the messages being learned based on emergent communication,

means for abstracting the state space for the environment based on the generated state information and the received state information messages to provide an abstracted state space, and

means for generating information for the device based on reinforcement learning for navigation in the environment based on input comprising the abstracted state space and further state information generated by the device and received from the at least one other device.

In accordance with a more detailed aspect the state information comprises local observations by the device, position of the device and messages from a previous time slot. The state information may comprise sensory information. The sensory information may comprise image data.

Means for abstracting may be configured to take emerging communication messages into account in generation of the abstracted state space.

An apparatus may be configured to start training of emergent communication with exchange of messages randomly selected from a predefined number of available messages. The apparatus may be configured to learn how to partition the search space into different categories and assign the messages into the categories. The apparatus may be configured to select a message based on at least one of local observation, position, and a message from a previous iteration.

In accordance with an aspect there is provided an apparatus configured to train in parallel means for abstracting and means for generating information based on reinforcement learning.

The means for abstracting may be configured to receive as input a feature matrix, an adjacency matrix, current position of the device, and at least one message from at least one other device. The means for abstracting may be configured to generate an abstracted feature matrix and abstracted adjacency matrix, and input the abstracted matrices into the means for generating information based on reinforcement learning.

The means for abstracting may be configured to receive a graph structure representing a local observation of the entire state space, and model the graph structure based on feature vectors for the device to learn a representation vector of the entire graph structure.

A computer software product implementing at least a part of the herein described functions may also be provided.

## Brief description of Drawings

Some aspects will now be described in further detail, by way of example only, with reference to the following examples and accompanying drawings, in which:

Fig. 1 illustrates an example of a system where the herein described principles can be practised;

Fig. 2 shows an example of use of an abstractor module;

Fig. 3 is an example of partial observation environments;

Fig. 4 illustrates abstracting local observations to different levels;

Fig. 5 is an example of decomposition of a quadtree;

Fig. 6 shows example of probability distribution over available communication symbols;

Fig. 7 shows an example abstractor architecture;

Fig. 8 shows example of functions of a GNN module of Fig. 7;

Fig. 9 shows another example abstractor architecture;

Fig. 10 is a flowchart of actions performed by a device according to an example; and

Figs. 11 - 17 show simulation results.

## Detailed description of examples

The following description gives an exemplifying description of some possibilities to practise the herein disclosed invention. Although the specification may refer to "an", "one", or "some" examples or embodiment(s) in several locations of the text, this does not necessarily mean that each reference is made to the same example of embodiment(s), or that a particular feature only applies to a single example or embodiment. Single features of different examples and embodiments may also be combined to provide other embodiments.

In general, the following detailed description is given with reference to task performed by autonomously movable vehicles or other devices. It is, however, noted that although some of the examples are given in the context of unmanned vehicles or autonomous vehicles, a device controlled based on the principles disclosed herein can be any device that can perform a task without external control, for example an autonomous device that is not under direct control of a human operator.

Fig. 1 shows a schematic example of three devices 10, 18 and 19 located in an environment 4. Non-limiting examples of the devices comprise moving vehicles such as automotive (e.g., driverless cars, vans, heavy good vehicles, motorcycles etc.), industrial automatic guided vehicles, farming, forestry, gardening, cleaning, clearing, and surveillance and/or local control equipment and so forth. Further non-limiting examples comprise machines such as robots, manipulators and other machines that can operate and move in space without presence of a human operator. The devices may also operate unmanned. Examples of unmanned devices are unmanned vehicles, such as aerial vehicles (e.g., unmanned aerial vehicles (UAVs) or drones), land vehicles and watercraft.

The environment 4 can comprise a geographical area. The three devices each are associated with respective parts or local areas 1, 2 and 3 of the environment 4. The devices can move in the environment towards desired destination(s). The movement can be autonomous in the sense that the devices are not under direct control of a human operator. The movement needs to take into account obstacles 6.

Each of the devices is provided with control apparatus 11. The control apparatus 11 can comprise at least one processor 13, 14 and at least one memory 15. The at least one memory 15 comprises computer code that, when executed on the at least one processor, causes the apparatus to perform at least one of the herein described functions. In the examples described in more detail below with reference to machine learning the control apparatuses of the devices provide the respective agents.

The control apparatus 11 can be configured to communicate via appropriate data communication system. The communications can be carried at least in part on wireless links. Appropriate communication interface, for example antenna 16, can be provided. The communications may be via local networks, wide area networks and/or direct communications between the devices.

Environment perception is a relevant consideration in autonomous mobility and navigation applications. Basic environment perception relies on sensors of the moving device, for example a vehicle (e.g., Light Detection and Ranging (LiDAR), cameras) to sense the surroundings. The devices 10, 18 and 19 are provided with apparatus 12 for providing sensory information of their respective environments. For example, the devices can be provided with imaging devices, e.g., cameras generating image data, radars, sound recording systems, temperature measuring systems and the like apparatus capable of detecting information about the surroundings of the devices that can be used as an input in navigation instruction generation.

The sensed region is limited into an area around the moving device. This area is referred to herein as the field-of-view (FoV). The FoV is limited by the capabilities of the sensors. In navigation scenarios, the target can be outside the FoV of the device. Because of this the device may need to search a relatively large space to find its destination.

Machine learning can be used to assist in the task of finding the destination, often referred to as target. Reinforcement learning (RL) algorithms are a specific category of machine learning techniques which can be used to navigate to the target. RL aims to find the best behaviour for an agent interacting with a dynamic environment in order to maximize a notion of accumulated reward. The goal of the RL agent is to find the best policy, which is the mapping of the perceived states to the actions to be taken.

In mobility application using reinforcement learning (RL) the state information of each agent (mobile device) can comprise sensory information. The action to be learnt by each agent is the direction to which the device moves to reach its destination with limited or no prior knowledge. Reinforcement learning (RL) can be utilised for decision-making scenarios, e.g., when a single agent is learning from interactions how to behave in order to achieve a goal. In particular, a single agent can interact with its environment repeatedly, and iteratively learn a policy that maps its observations to its actions. The main objective is to maximize the cumulative discounted reward.

Vision based navigation is of relevance to all kinds of autonomous and automated movable device applications. These include automated guided vehicles (AGVs) in industrial scenarios, in which AGVs may be moving towards a target that is outside its FoV. Agents may try to achieve a goal alone by utilizing only local information available to itself but thus can be challenging if vanilla reinforcement learning algorithms are to be utilized, due to the increasing size of state space in complex environments.

Multiple agents may coexist in the same environment. The cooperation between agents can be used to improve the agents' own performance and in helping each agent to achieve its own goal. The agents can interact and try to learn optimal policies simultaneously, either competitively, cooperatively or a mix of the two. Such setting is referred to as multi-agent reinforcement learning (MARL). MARL is an extension of RL for to multi-agent systems (MAS), where multiple agents interact with a system, i.e., the environment.

RL problems can become challenging due to possibly huge state space. Within complex real-world tasks and vision-based navigation RL agents must learn about their environment through high-dimensional noisy observations while receiving sparse or delayed rewards. This can pose a challenge to the learning task since this high-dimensional space needs to be explored in order to learn a suitable policy. This can lead to an increased training duration.

Having multiple learning agents within the same environment poses extra challenges to the learning problem as the problem's complexity increases exponentially with the number of agents. In a multiagent environment, agents interact at the same time with the environment and potentially with each other and learn concurrently. Moreover, agents are usually having a partial observability of the environment, posing a yet further challenge to the learning behaviour. Deep RL and MARL can require millions of interactions for an agent to learn. Below examples describe ways how to provide abstractions of the state space.

Manually designing a communication protocol for a cooperative MARL environment can also be a demanding task, not least because of the huge number of states. The examples below relate to RL vision-based cooperative navigation scenarios where the agents can communicate using learned communication protocols rather than predefined communication protocols in order to coordinate their operation. The learning can be provided based on emergent communications. In the examples explained in more detail below a neural network architecture is provided where a state space abstraction can be learned jointly with an emergent communication protocol among the agents participating in complex reinforcement learning (RL) problems. However, learning a communication protocol between the agents through emergent communication can pose an additional exploration problem as the chances of consistent protocol being found and rewarded is challenging. Also, the random utterances transmitted between agents at the beginning of training add to the already high variance of MARL, adding to the challenges of the learning problem.

The following describes in more detail examples how to address the complexity by means of state abstraction. State abstraction is a method for compressing the environment's state space to process complex problems in simpler forms. Compressed models of the environment are provided that enable efficient training, decision making, and effective generalization.

An illustrative example of an abstractor that reduces the size of the state space through abstracting a multi-layered tree of sensory information is shown schematically in Fig. 2. The tree in Fig. 2 is for a two-dimensional (2D) environment in which each grid is split into four (quadtree). It is also possible to have a tree for three-dimensional (3D) environment in which a grid block is split into eight (octree).

A multi-layered tree 20 with large number of nodes 21 representing an entire environment is input into an abstractor 22. The abstractor can also be provided with state information 24. The state information input may comprise information such as the position of the agent and messages received from other agents. The abstraction module 22 outputs an abstracted tree 26 with reduced number of nodes which can then be used for generating the actual navigation decisions for the agent by a RL-policy module.

Each agent can adaptively abstract the sensory information and trim the input full tree. The goal of the abstractor functionality is to determine a suitable tree decomposition to determine which nodes to merge or which edges to trim to reduce the size of the state space to be explored without much degradation in the policy performance. The abstraction can depend on the current sensory information of the agent itself and the received message(s) from the other agent(s).

In RL vision-based cooperative navigation scenarios, each agent can sense a partial region of the whole environment, i.e., provide a partial observation. An example of Fig. 3 shows an entire environment 30 and partial observations 33, 35 thereof by two agents 32 and 34. White regions 36 are unoccupied (i.e., without obstacles), black regions 37 are occupied and grey regions 38 are of unknown state due to occlusions. The common target is denoted by reference 31.

A structured space of the environment can be obtained from 2D or 3D partial observation, e.g., by utilizing quad or octree decomposition. 3D occupancy maps may be useful for devices moving in three-dimensional space such as drones or underwater vessels. Structured spaces allow the agent to see similarities and form and apply concepts, thereby enabling the agent to generalize better from past experiences. Within quad/octree decomposition, a 2D / 3D space can be recursively decomposed into four/eight equal sub-regions, referred to here as blocks, until all locations within a block have the same state (occupied, non-occupied or unknown) or until reaching a maximum predefined resolution (tree-depth).

Different quadtree depths are exemplified in Fig. 4. From Fig. 4 it can be observed that with too much abstraction (e.g., depth level 1) the challenge is to find a good policy whereas with no abstraction (e.g., full resolution) the challenge is to explore the huge state space.

The trade-off between abstraction and agent's policy performance can be adaptively balanced. Fig. 5 is an illustration of possible decomposition of a quadtree in which nodes can be merged to form an abstract state. A good quadtree decomposition may be found by constructing the causal graph (see Fig. 5, right) that represents how the state of each block is affected by the other blocks within the quadtree.

The approach does not assume prior knowledge of an expert policy in order to learn the abstraction. Moreover, the size of the abstracted space may not need to be determined a priori.

For the devices / agents to cooperate in order to achieve their task they can communicate messages in the form of symbols between each other. These communication symbols map to their current state such as sensory data, position, etc. Assigning a dedicated communication symbol for each state in the state space (one-to-one mapping, or bijective function) may not be desirable due to the huge state space. To exemplify, assume the space is of size S. Assigning a different communication symbol to each state would mean that the size of each symbol would be $\log_2 S$ in bits (before adding any headers). This would drastically affect and overload the communication resources, especially considering that the moving agents are using wireless resources.

By limiting the number of available communication symbols to be exchanged, i.e., the vocabulary size, the agents need to learn how to "efficiently" map their current state to the communication symbols (many-to-one mapping) and they need to understand each other. This can be provided via learning a communication protocol. This process is referred hereinafter as emergent communication. Communication is emergent in the sense that at the beginning of training the symbols emitted by the agents have no predefined semantics nor prespecified usage rules. The meaning and syntax emerge through training.

More specifically, cooperation between agents can be achieved by utilizing existing multiagent reinforcement learning (MARL) techniques along with emergent communication. Agents can be configured to learn communication protocols in order to coordinate and share information that is needed to solve the tasks. Cooperation between the agents is based on exchanging messages that start as symbols with no predefined meaning. Meaning for symbols emerge during the training. This allows for constructing communication protocols for cooperation on the fly without prior knowledge or agreement. The learned communication protocol helps the agents to cooperate in order to achieve their task without need for predefined communication protocol or a priori knowledge of the messages.

The emergent communication process also provides information that can be used to guide the state abstraction. The abstractor can take the communicated symbols as a part of its state information input. This gives the agent additional information outside its local partial observation which the agent can utilise during the abstraction process. The emergent communication can, for example, help the abstractor to trim some branches of the tree depending on how it interprets the communicated symbol.

The learned communication protocol can also be used to enhance privacy and security of the exchanged messages among the agents. This is so because the protocol emerges during training and is not known beforehand to any external entities. Although an external entity may be able to observe the raw global state and the raw local observation of each agent it would be challenging for the external entity to map these observations to the communicated symbols without knowing the learnt abstraction function as this is known only by the agents through the learning process.

The expectation at the initial training episodes is that the transmitted communication symbols are randomly chosen from the vocabulary, regardless of the current input state. Each agent has access to M message symbols where at each time step it can select one message out of those M to transmit. **If** this is translated to a bit sequence, then each message can be represented using $\log_2 M$ bits. What is transmitted is the bits that depend on, or are function of the abstracted state space, the agent's position and the received symbols from the previous time slot. The vocabulary is the set of message symbols available to each agent. At every time step, the agent selects one message symbol from this vocabulary to transmit. At the beginning of the training process, weights can be assigned to the neurons of the neural network randomly. During training, these weights are optimized leading to a more defined choice of the message symbols. As the training process proceed a more defined mapping appears. This can be seen as learning how to partition the state space into different categories (the number of categories is equal to the vocabulary size) and assigning a communication symbol to each category. Fig. 6 illustrates an example of probability distribution over available communication symbols given same observation in the course of training.

Fig. 7 shows a more detailed example for a neural network architecture for a state abstractor. This exemplifying abstractor architecture for each agent can first include a graph neural network (GNN). GNNs use the graph structure and the state of each node to learn a representation vector of the entire input graph G. The input comprises the X and A matrices representing the graph. More specifically, the input graph structure is modelled by a feature matrix X. This includes the feature vector of each node in the quadtree (the node's ID and its occupancy). As an example, assume X to be a matrix of size N×M, where N is the total number of nodes in the tree and M is the size of the feature vector of each node. The feature vector is a design decision, it can include the node ID and the occupancy of this node in which case M is equal to 2. In case it includes the node ID and in the example Red Green Blue (RGB) colour for the occupancy state. In this example free regions are of white colour, occupied regions are of black colour, and unknown regions are of grey colour. In that case M is equal to 4 for the node.

An adjacency matrix A has an entry (i,j) which is equal to 1 only if there is an edge between node i and node j in the quadtree structure.

GNNs can follow a neighbourhood aggregation strategy where after k iterations of aggregation, a node's representation captures the structural information within its k-hop neighbourhood. In other words, k message passing layers are concatenated. Aggregating those node representations would generate an embedding for the entire graph. Embedding is a process of converting high-dimensional data to low-dimensional data in the form of a vector. The conversion is done in such a way that the two converting nodes are semantically similar. Embedding can be used to improve efficiency and usability of machine learning models. Embeddings can be advantageously used for the abstraction because of the capability of lowering the dimensionality of categorical variables and representing them meaningfully in the altered space.

Value of k can be chosen depending on the size of the agent's local observation rather than the whole map grid. Value of k can depend on the number of levels of the full-resolution quad/octree. Value of k can be chosen empirically by avoiding large values to avoid over-smoothing.

The output of GNN, $h_{G,}$ is an embedding of the entire input graph, where similar input graphs should produce similar embeddings. Fig. 8 illustrates a more detailed example of operations of a GNN comprising GNN's aggregate, Combine and Readout functions.

The output of the GNN stage can be input into a multilayer perceptron (MLP) stage. A multilayer perceptron (MLP) is a feedforward artificial neural network that generates a set of outputs from a set of inputs. An MLP is characterized by several layers of input nodes connected as a directed graph between the input and output layers. MLP uses backpropagation for training the network. The MLP combines the graph embedding from GNN with the other information available at the agent. This is shown to include agent's position and received messages from other agents. The position can be represented as x-y coordinates in the global map, or any other proper way. The merging probabilities are implicitly learnt during training. The values output from the activation function will depend on the neurons within the MLP, whose values are modified at every training iteration depending on loss function and so on. It is noted that multiple embeddings from multiple agents are not merged. Instead, each agent only utilizes its local graph embedding.

MLP stage output is input into a Straight-through Gumbel Softmax (ST-GS) stage. The input is sampled using a straight-through gumbel softmax estimator. ST-GS uses the argmax over Gumbel random variables to generate a discrete random outcome in the forward pass. (1 or 0 for each non-leave node of the tree). It computes derivatives via backpropagation through a tempered softmax of the same Gumbel sample. The previous stage produced a score to merge at a node or not. The ST-GS converts the score to 1 or 0 to actually perform the merging or not. This step makes the categorical selection (0 or 1 for merging) differentiable, so that training with backpropagation can work.

Postprocessing stage comprises processing the output of the ST-GS estimator in the forward pass. This is the step where the output merging decisions from Gumbel-Softmax are processed to generate an abstracted feature matrix and an abstracted adjacency matrix. The output of the abstractor comprises an abstracted feature matrix $X_{abs}$ and abstracted adjacency matrix $A_{abs}$.

The RL-policy can then determine navigation actions and communication actions based on the abstracted matrices and state information from the agents. Learning of the communication protocol can happen in the same way as learning the navigation actions. It is the same RL problem but instead of only taking a navigation action a communication action can be taken as well.

Fig. 9 shows otherwise similar abstractor to Fig. 7 but in this example the MLP is additionally provided with LogSigmoid activation before the ST-GS stage. Concatenating the output graph embedding with the other information available at the agent (it's position and received symbols from other agents) and passing it to an MLP with LogSigmoid activation may be advantageous in certain scenarios for obtaining logits of the merging probability for each non-leaf node in the input tree.

LogSigmoid may be used if Gumbel-softmax takes as input the log probabilities and outputs the sampling from those probabilities in which case sigmoid provides values between 0 to 1 (can be seen as probabilities), and the Log of the sigmoid produces the log of probabilities for Gumbel softmax. However, it is noted that the input to Gumbel-softmax can be general and not necessarily restricted to log probabilities in which case the LogSigmoid activation can be omitted. Omitting the LogSigmoid activation also reduces possibility of saturation, accompanied by sigmoid activation functions, that can arise during training.

Training of the abstractor can be done simultaneously while training the RL policy. No expert policy is assumed to be known a priori. A reason for this is that the state abstraction is introduced to ease the RL policy training problem by reducing the state space that needs to be explored. The abstraction does not depend only on the map but takes also into account the communication protocol that emerges during the training.

Agents learn independently while interacting through exchanging message symbols between each other. At the beginning of the training the message symbols may not have any predefined meaning but the meaning for different symbols emerges during the training. The only restriction is the size of the vocabulary or in other words, the total number of message symbols available. For example, if the vocabulary size is ten, then at each step the agent will select one out of the ten options available, depending on its observation, position and received messages from previous step. If this is converted to bit sequences, and if the size of the vocabulary is M, then the length of the bit sequence will be $\log_2 M$.

In accordance with a possibility it is not necessary to have a training objective on the messages. Instead, a loss function can be modified to accommodate any objective required.

Any existing single-agent RL algorithm can be used for the training process. The training objective can be to minimize the number of edges within the tree (to abstract the tree as much as possible) while still being able to complete the task.

During the training, the agent may aim to minimize the following loss:

$$\text{Loss} = \text{RL loss} + \mu * \|A_{abs}\|_F,$$

where

$\|A_{abs}\|_F = \sqrt{(\Sigma_i \Sigma_j |\alpha_{ij}|^2)}$ (= the Frobenius norm of the abstracted adjacency Matrix output from the abstractor), and

$\mu$ is a hyperparameter determining how much weight to be given to the abstraction.

An example of the method is shown in the flowchart of Fig. 10. In the shown method for generating information for navigation in an environment a device generates at 100 state information about a part of the environment where the device is positioned. The device also receives at 102 from at least one other device messages comprising state information about a part of the environment where the at least one second device is positioned. The device learns the meaning of the messages based on emergent communication. The state space for the environment is abstracted at 104 by an abstractor module based on state information generated by the device and received state information messages to provide an abstracted state space. The abstracted state space is then processed at 106 by a reinforcement learning module to generate information for the device for navigation in the environment based on the abstracted state space and further state information by the device and the at least one second device.

Results of simulation of performed on the herein described principles are shown in Figs. 11 to 17. The method was evaluated in a MARL grid environment, a snapshot of such environment being shown in one of the partial environments 33, 35 of Fig. 3. Two agents 32, 34 were used. Environment states location of agents, goal and walls were randomized at every episode. At each time step, each agent observes a partial view of the environment centred at its current position. The task of agents was set to reach the target location 31 as fast as possible. Each agent received a reward of one when completing the task. Asynchronous advantage actor-critic (A3C) was used to optimize the RL policy. Decentralized training was used where each agent is parametrized by an independent policy.

Figs. 11, 12, 13 and 14 show evaluations of training speed and performance of the trained policy when utilizing the proposed adaptive abstractor (Proposed). This is compared to different baselines, i.e., to a Full Resolution Tree, Level-2 tree, Level-1 Tree and Full-Resolution image (See Figs. 4 and 5). Fig. 11 shows the total reward and Figs. 12 and 13 show the reward achieved by each agent throughout the training. The background curves are the actual achieved reward and each point over these curves is the average of ten evaluation episodes. The curves represented by the solid lines are smoothed. The smoothing is provided to gain insights about the training process by the moving average over a window size of 200000 training iterations (or episodes). It can be observed that with fixed abstraction, e.g., Level-1 Tree and Level-2 Tree, baselines were not able to learn any decent policy during training. This is likely to be due to the loss of useful information when the current observation and the received communication symbols from the other agent are not considered during abstraction. Moreover, the adaptive abstraction method according to the herein disclosed principles (Proposed) learns a policy that has better performance in terms of the achieved reward compared to Full-Resolution Image and Full-Resolution Tree baselines. This is so despite these baselines utilizing all the available information without any abstraction. The difference is assumed to be caused by the adaptive ability of the herein disclosed abstractor to trim the input tree dependent on the current observation and the received communication symbols whereby the state space to be explored is reduced compared to the full-resolution baselines without losing much useful information.

Fig. 14 shows rate of failure of the agents during the evaluation episodes throughout the training process. An episode is considered a failure if any of the agents did not reach the goal location before the allowed maximum episode length. This rate of failure is referred to as Timeout. Similar to Figs. 11 - 13, the background curves are the unsmoothed achieved reward where each point over these curves is the average of 10 evaluation episodes. These curves are smoothed by the moving average over a window size of 200000 training iteration (or episode) and represented by the solid lines. Similar trend can be seen in the achieved reward by the agents where the herein proposed adaptive abstractor outperforms the baselines and achieves a lower timeout after fewer training iterations.

The degree of abstraction achieved by using the proposed adaptive abstractor was measured based on abstraction loss $\|A_{abs}\|_F = \sqrt{\Sigma_i \Sigma_j |\alpha_{ij}|^2}$. It can be noted that the abstraction loss is directly proportional to the number of edges in the abstracted tree. The result is shown in Fig. 15 which plots the abstraction loss of the proposed adaptive abstractor during the training process along with the abstraction loss of the tree baselines. The tree baselines can be considered as a fixed abstraction approach and therefore their abstraction loss is represented by a straight line. Note that the degree of abstraction achieved by the proposed method lies between Level-1 and Level-2 trees. Despite that the trained policy using the proposed abstractor outperforms that of the baselines, as shown in Figs. 11, 12, 13 and 14. This can be presumed be caused by the adaptive ability of the abstractor to trim the input tree dependent on the situations the agent faces.

In order to evaluate the generalization property of the trained policy, the local observation of each agent was altered with a percentage of noise $\alpha$. Specifically, during evaluation the occupied and unoccupied states of the locations within an agent's FoV are observed correctly by the agent with probability 1-$\alpha$ and are observed as unknown state with probability $\alpha$. This scenario models the case where the sensors on a deployed agent wear out affecting the agent's local observation. A run of one hundred evaluation episodes utilizing the trained policies for different values of $\alpha$ was performed. Fig. 16 shows the achieved performance where each point is the average over the hundred evaluation episodes. Note that the policy is trained with $\alpha$= 0. It can be observed that the policy generalizes well with only small degradation in performance. This is so even when $\alpha$=0.6. This is presumed to be so because of the structured input space which allowed the agent to see similarities, form concepts, and apply them, thereby enabling the agent to generalize better.

To assess whether communication has emerged at all during the training process, the same scenario was performed without a communication channel. The achieved performance of with and without communication are compared in Fig. 17. The total reward achieved by the above described abstraction method during the training process was analyzed with and without communication. The results show that when a communication channel exists the performance is improved as the agents can communicate to improve their performance and help each other to achieve the task.

Simulations have shown that it is possible to significantly decrease the state space and hence the complexity of training reinforcement learning vision-based scenarios, e.g., navigation and environment perception for mobile devices such as vehicles and AGVs without sacrificing accuracy. The method can be integrated into various products, for example in smart factories and critical network offerings. This can provide computing resource savings, particularly in scenarios where computing is offloaded to edge clouds, as well as communication resource saving, since it avoids exchanging the full map details, which can be either infeasible or resource consuming in such use cases with low latency requirements.

It is noted that while the above describes example embodiments, there are several variations and modifications which may be made to the disclosed solution without departing from the scope of the present invention. Different features from different embodiments may be combined and order of steps altered.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. A computer program comprising instructions, which, when executed by an apparatus, cause the apparatus to perform a method of generating state information about a part of the environment where a device is positioned, receiving, by the device from at least one other device, messages comprising state information about a part of the environment where the at least one other device is positioned, the meaning of the messages being learned based on emergent communication, abstracting the state space for the environment by an abstractor module based on the generated state information and the received state information messages to provide an abstracted state space, and generating information for the device by a reinforcement learning module for navigation in the environment based on the abstracted state space and further state information generated by the device and received from the at least one other device.

The program may be non-transitory. It is noted that "non-transitory", as used herein, is a limitation of the medium itself (i.e., tangible, not a signal ) as opposed to a limitation on data storage persistency (e.g., RAM vs. ROM).

Further in this regard it should be noted that any of the above procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more general purpose computers, special purpose computers, microprocessors, digital signal processors (DSPs), application specific integrated circuits (ASIC), gate level circuits and processors based on multi core processor architecture, as non-limiting examples.

Alternatively or additionally some embodiments may be implemented using circuitry. The circuitry may be configured to perform one or more of the functions and/or method procedures previously described. That circuitry may be provided in the network entity and/or in the communications device and/or a server and/or a device.

As used in this application, the term "circuitry" may refer to one or more or all of the following:

(a) hardware-only circuit implementations (such as implementations in only analogue and/or digital circuitry);

(b) combinations of hardware circuits and software, such as: (i) a combination of analogue and/or digital hardware circuit(s) with software/firmware and (ii) any portions of hardware processor(s) with software (including digital signal processor(s)), software, and memory(ies) that work together to cause the communications device and/or device and/or server and/or network entity to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

It is noted that whilst embodiments have been described in relation to certain architectures, similar principles can be applied to other systems. Therefore, although certain embodiments were described above by way of example with reference to certain exemplifying architectures for wireless networks, technologies standards, and protocols, the herein described features may be applied to any other suitable forms of systems, architectures and devices than those illustrated and described in detail in the above examples. It is also noted that different combinations of different embodiments are possible. It is also noted herein that while the above describes exemplifying embodiments, there are several variations and modifications which may be made to the disclosed solution without departing from the spirit and scope of the present invention.

**Claims**

**1.** A method for generating information for navigation in an environment, comprising:

generating, by a device (10), state information about a part of the environment (1) where the device is positioned,
receiving, by the device from at least one other device (18, 19), messages comprising abstracted state space information about a part of the environment (2, 3) where the at least one other device is positioned, the meaning of the messages being learned by a reinforcement learning module based on emergent communication, the learning of the meaning comprising learning the communication protocol for receiving the messages,
abstracting the state space for the environment by an abstractor module (22) based on the generated state information and the received messages (24) to provide an abstracted state space (26),
training the abstractor module and the reinforcement learning module in parallel, and
generating information for the device by the reinforcement learning module for navigation in the environment based on the abstracted state space and further state information generated by the device and further messages received from the at least one other device.

**2.** A method according to claim 1, wherein the state information comprises local observations by the device for the part of the environment (1) where the device is positioned, position of the device and messages from a previous time slot.

**3.** A method according to claim 1 or 2, wherein the state information comprises sensory information.

**4.** A method according to claim 3, wherein the state information comprises sensory information generated by an imaging device.

**5.** A method according to any preceding claim, wherein training of the emergent communication starts with exchange of messages randomly selected from a predefined number of available messages.

**6.** A method according to claim 5, comprising learning how to partition the search space into different categories and assign the messages into the categories.

**7.** A method according to claim 5 or 6, comprising selecting a message based on at least one of: local observation, position, or a message from a previous iteration step.

**8.** A method according to any preceding claim, comprising describing local observations by the device for the part of the environment (1) where the device is positioned in a tree structure.

**9.** A method according to claim8, wherein the tree structure comprises a quadtree for two-dimensional environment or octree for three-dimensional environment.

**10.** A method according to any preceding claim, comprising

input to the abstractor module of a feature matrix, an adjacency matrix, current position of the device, and at least one message from at least one other device,
generating an abstracted feature matrix and an abstracted adjacency matrix, and
input of the abstracted matrices into the reinforcement learning module.

**11.** A method according to any preceding claim, wherein the abstracting of the state space comprises local embedding of the state information.

**12.** A method according to any preceding claim, wherein the abstracting of the state space comprises receiving a graph structure representing a local observation of the entire state space, and modelling the graph structure based on feature vectors for the device to learn a representation vector of the entire graph structure.

**13.** An apparatus comprising means for performing the method of any of claims 1 to 12.

**14.** A computer program comprising instructions, which, when executed by an apparatus, cause the apparatus to perform the method of any of claims 1 to 12.

**Patentansprüche**

**1.** Verfahren zum Erzeugen von Informationen für die Navigation in einer Umgebung, umfassend:

Erzeugen, durch eine Vorrichtung (10), von Zustandsinformationen über einen Teil der Umgebung (1), in dem die Vorrichtung positioniert ist,
Empfangen, durch die Vorrichtung, von mindestens einer anderen Vorrichtung (18, 19), von Nachrichten, die abstrahierte Zustandsrauminformationen über einen Teil der Umgebung (2, 3) umfassen, in dem die mindestens eine andere Vorrichtung positioniert ist, wobei die Bedeutung der Nachrichten durch ein Modul für verstärkendes Lernen basierend auf emergenter Kommunikation gelernt wird, wobei das Lernen der Bedeutung das Lernen des Kommunikationsprotokolls zum Empfangen der Nachrichten umfasst,
Abstrahieren des Zustandsraums für die Umgebung durch ein Abstrahierungsmodul (22) basierend auf den erzeugten Zustandsinformationen und den empfangenen Nachrichten (24), um einen abstrahierten Zustandsraum (26) bereitzustellen,
Trainieren des Abstrahierungsmoduls und des Moduls für verstärkendes Lernen parallel, und
Erzeugen von Informationen für die Vorrichtung durch das Modul für verstärkendes Lernen für die Navigation in der Umgebung basierend auf dem abstrahierten Zustandsraum und weiteren Zustandsinformationen, die durch die Vorrichtung erzeugt werden, und weiteren Nachrichten, die von der mindestens einen anderen Vorrichtung empfangen werden.

**2.** Verfahren nach Anspruch 1, wobei die Zustandsinformationen lokale Beobachtungen durch die Vorrichtung für den Teil der Umgebung (1), in dem die Vorrichtung positioniert ist, die Position der Vorrichtung und Nachrichten aus einem vorhergehenden Zeitschlitz umfassen.

**3.** Verfahren nach Anspruch 1 oder 2, wobei die Zustandsinformationen sensorische Informationen umfassen.

**4.** Verfahren nach Anspruch 3, wobei die Zustandsinformationen sensorische Informationen umfassen, die durch eine Bildgebungsvorrichtung erzeugt werden.

**5.** Verfahren nach einem der vorhergehenden Ansprüche, wobei das Training der emergenten Kommunikation mit einem Austausch von Nachrichten beginnt, die zufällig aus einer vordefinierten Anzahl von verfügbaren Nachrichten ausgewählt werden.

**6.** Verfahren nach Anspruch 5, umfassend das Lernen, wie der Suchraum in verschiedene Kategorien zu partitionieren ist und die Nachrichten den Kategorien zuzuordnen sind.

**7.** Verfahren nach Anspruch 5 oder 6, umfassend das Auswählen einer Nachricht basierend auf mindestens einem von: einer lokalen Beobachtung, einer Position oder einer Nachricht aus einem vorhergehenden Iterationsschritt.

**8.** Verfahren nach einem der vorhergehenden Ansprüche, umfassend das Beschreiben lokaler Beobachtungen durch die Vorrichtung für den Teil der Umgebung (1), in dem die Vorrichtung positioniert ist, in einer Baumstruktur.

**9.** Verfahren nach Anspruch 8, wobei die Baumstruktur einen Quadtree für eine zweidimensionale Umgebung oder einen Octree für eine dreidimensionale Umgebung umfasst.

**10.** Verfahren nach einem der vorhergehenden Ansprüche, umfassend

Eingabe an das Abstrahierungsmodul einer Merkmalsmatrix, einer Adjazenzmatrix, der aktuellen Position der Vorrichtung und mindestens einer Nachricht von mindestens einer anderen Vorrichtung,
Erzeugen einer abstrahierten Merkmalsmatrix und einer abstrahierten Adjazenzmatrix, und
Eingabe der abstrahierten Matrizen in das Modul für verstärkendes Lernen.

**11.** Verfahren nach einem der vorhergehenden Ansprüche, wobei das Abstrahieren des Zustandsraums ein lokales Einbetten der Zustandsinformationen umfasst.

**12.** Verfahren nach einem der vorhergehenden Ansprüche, wobei das Abstrahieren des Zustandsraums das Empfangen einer Graphstruktur, die eine lokale Beobachtung des gesamten Zustandsraums darstellt, und das Modellieren der Graphstruktur basierend auf Merkmalsvektoren umfasst, damit die Vorrichtung einen Repräsentationsvektor der gesamten Graphstruktur lernt.

**13.** Vorrichtung, umfassend Mittel zur Durchführung des Verfahrens nach einem der Ansprüche 1 bis 12.

**14.** Computerprogramm, umfassend Anweisungen, die, wenn sie durch eine Vorrichtung ausgeführt werden, die Vorrichtung veranlassen, das Verfahren nach einem der Ansprüche 1 bis 12 durchzuführen.

**Revendications**

**1.** Procédé de génération d'informations pour la navigation dans un environnement, comprenant :

la génération, par un dispositif (10), d'informations d'état concernant une partie de l'environnement (1) où le dispositif est positionné,
la réception, par le dispositif, en provenance d'au moins un autre dispositif (18, 19), de messages comprenant des informations d'espace d'état abstrait concernant une partie de l'environnement (2, 3) où l'au moins un autre dispositif est positionné, le sens des messages étant appris par un module d'apprentissage par renforcement basé sur une communication émergente, l'apprentissage du sens comprenant l'apprentissage du protocole de communication pour la réception des messages,
l'abstraction de l'espace d'état pour l'environnement par un module abstracteur (22) basé sur les informations d'état générées et les messages reçus (24) pour fournir un espace d'état abstrait (26),
l'entraînement du module abstracteur et du module d'apprentissage par renforcement en parallèle, et
la génération d'informations pour le dispositif par le module d'apprentissage par renforcement pour la navigation dans l'environnement basée sur l'espace d'état abstrait et des informations d'état supplémentaires générées par le dispositif et des messages supplémentaires reçus de l'au moins un autre dispositif.

**2.** Procédé selon la revendication 1, dans lequel les informations d'état comprennent des observations locales par le dispositif pour la partie de l'environnement (1) où le dispositif est positionné, la position du dispositif et des messages d'un créneau temporel précédent.

**3.** Procédé selon la revendication 1 ou 2, dans lequel les informations d'état comprennent des informations sensorielles.

**4.** Procédé selon la revendication 3, dans lequel les informations d'état comprennent des informations sensorielles générées par un dispositif d'imagerie.

**5.** Procédé selon l'une quelconque des revendications précédentes, dans lequel l'entraînement de la communication émergente commence par un échange de messages sélectionnés de manière aléatoire parmi un nombre prédéfini de messages disponibles.

**6.** Procédé selon la revendication 5, comprenant l'apprentissage de la manière de partitionner l'espace de recherche en différentes catégories et d'affecter les messages aux catégories.

**7.** Procédé selon la revendication 5 ou 6, comprenant la sélection d'un message basée sur au moins l'un parmi : une observation locale, une position, ou un message d'une étape d'itération précédente.

**8.** Procédé selon l'une quelconque des revendications précédentes, comprenant la description d'observations locales par le dispositif pour la partie de l'environnement (1) où le dispositif est positionné dans une structure arborescente.

**9.** Procédé selon la revendication 8, dans lequel la structure arborescente comprend un quadtree pour un environnement bidimensionnel ou un octree pour un environnement tridimensionnel.

**10.** Procédé selon l'une quelconque des revendications précédentes, comprenant

entrée au module abstracteur d'une matrice de caractéristiques, d'une matrice d'adjacence, de la position actuelle du dispositif, et d'au moins un message provenant d'au moins un autre dispositif,
la génération d'une matrice de caractéristiques abstraite et d'une matrice d'adjacence abstraite, et
entrée des matrices abstraites dans le module d'apprentissage par renforcement.

**11.** Procédé selon l'une quelconque des revendications précédentes, dans lequel l'abstraction de l'espace d'état comprend un plongement local des informations d'état.

**12.** Procédé selon l'une quelconque des revendications précédentes, dans lequel l'abstraction de l'espace d'état comprend la réception d'une structure de graphe représentant une observation locale de l'intégralité de l'espace d'état, et la modélisation de la structure de graphe basée sur des vecteurs de caractéristiques pour que le dispositif apprenne un vecteur de représentation de l'intégralité de la structure de graphe.

**13.** Appareil comprenant des moyens pour la mise en œuvre du procédé selon l'une quelconque des revendications 1 à 12.

**14.** Programme d'ordinateur comprenant des instructions qui, lorsqu'elles sont exécutées par un appareil, amènent l'appareil à mettre en œuvre le procédé selon l'une quelconque des revendications 1 à 12.

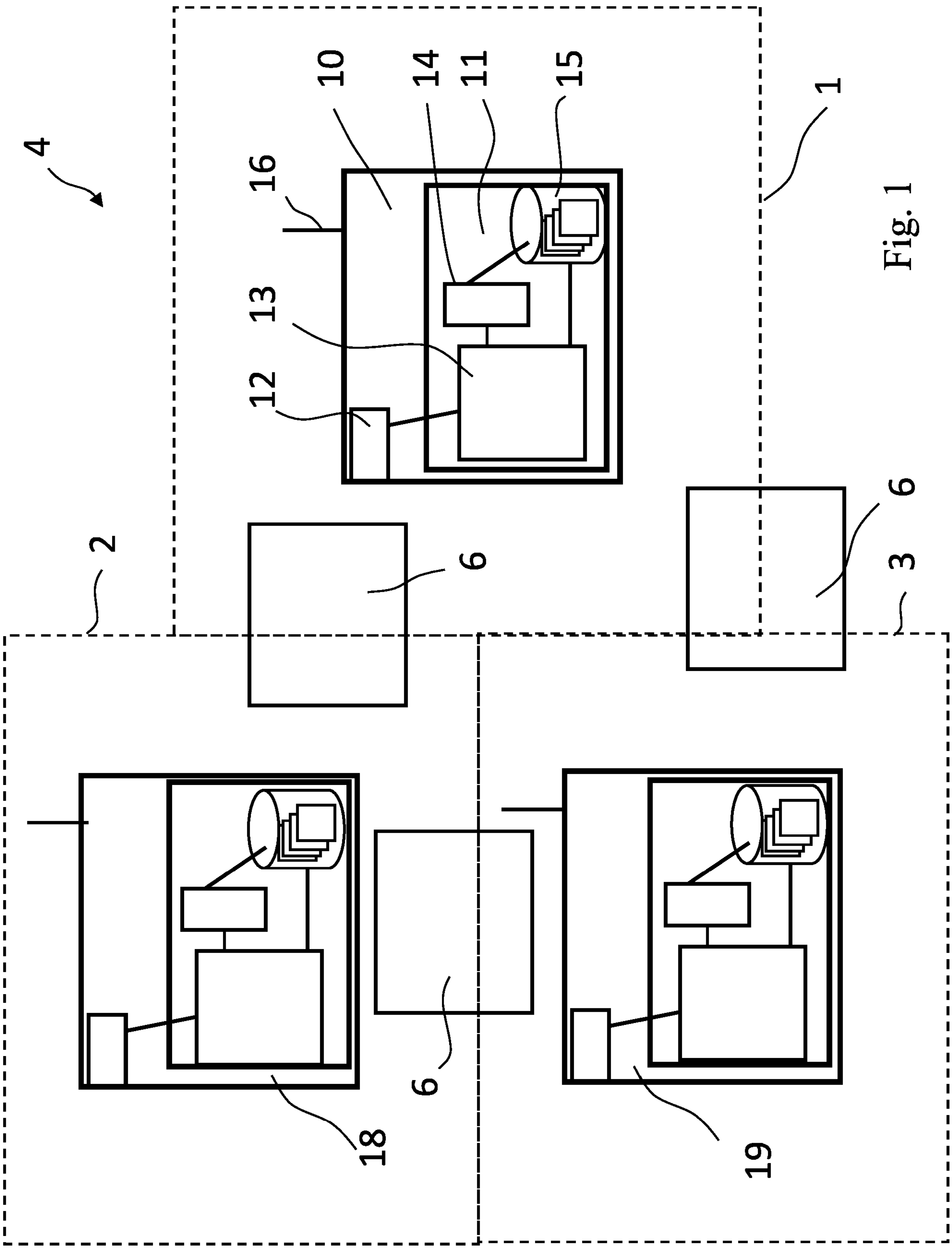


Fig. 1

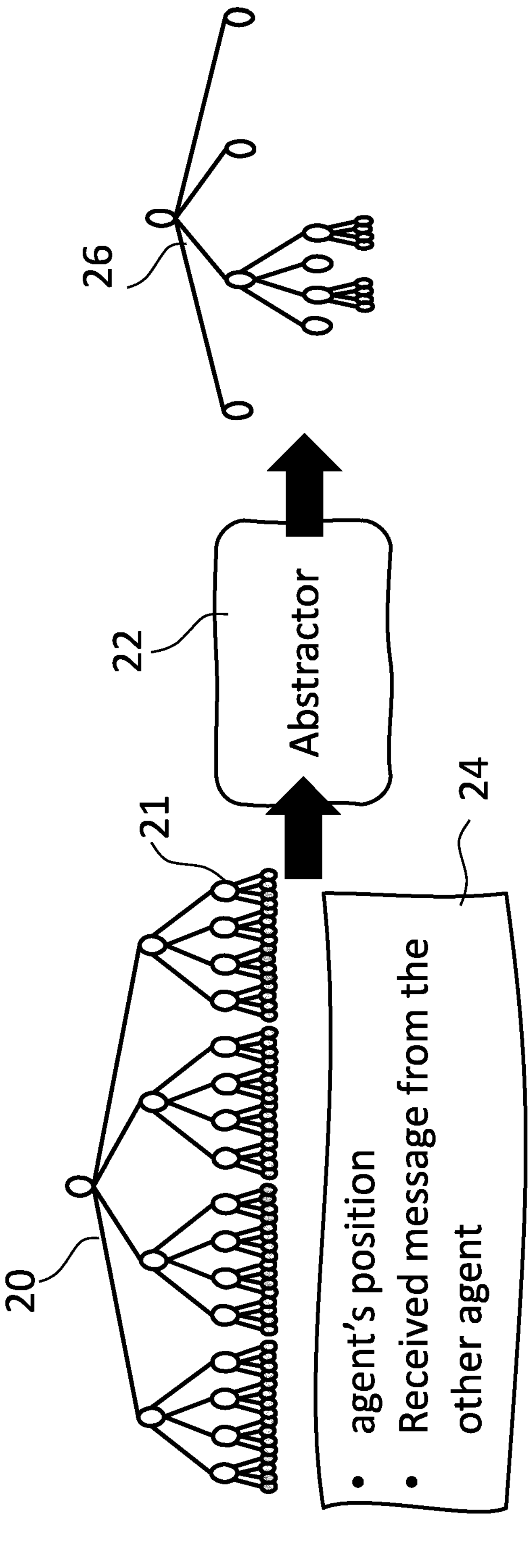
20
21
22
24
26
Abstractor
agent's position
Received message from the other agent

Fig. 2

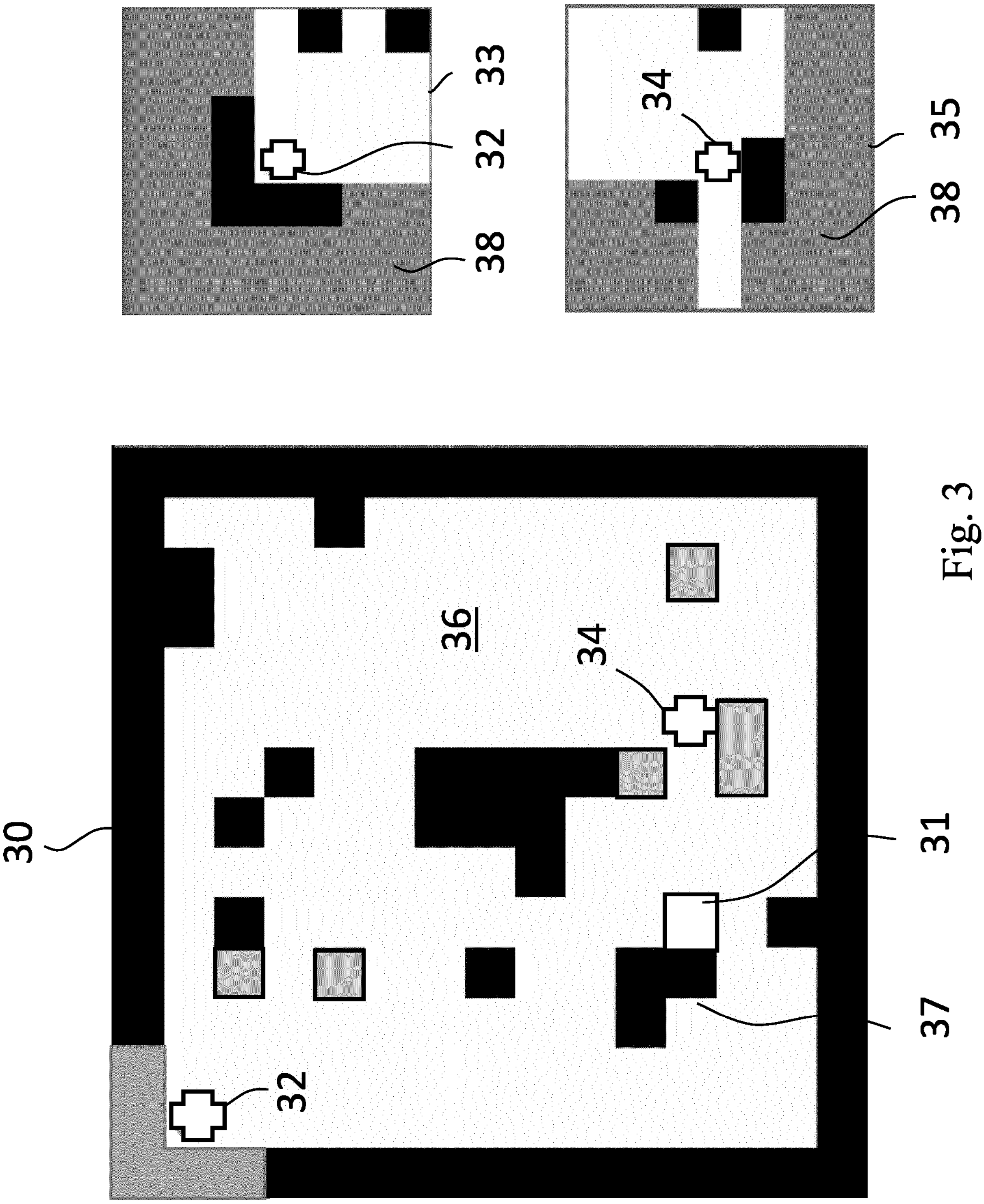


Fig. 3

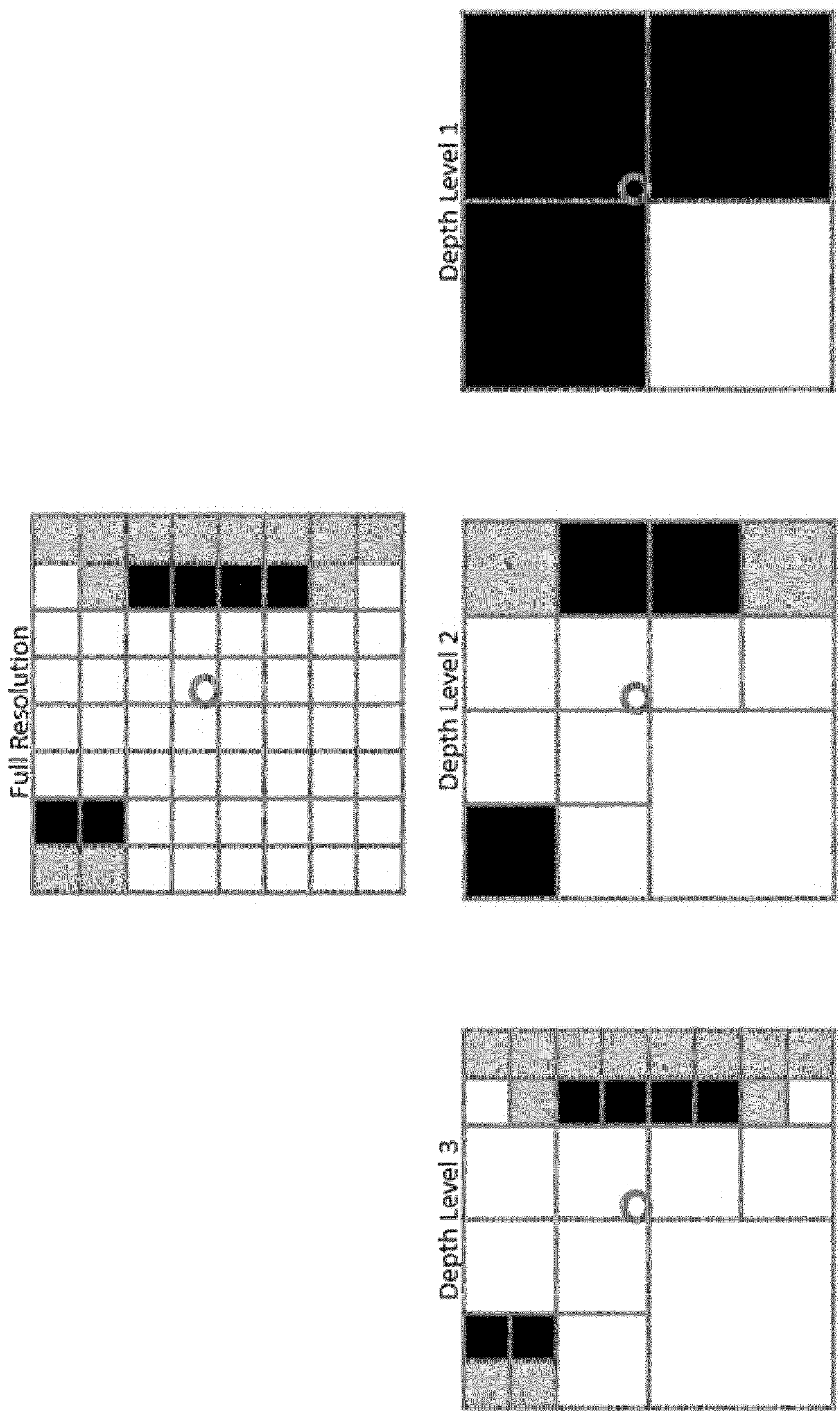


Fig. 4

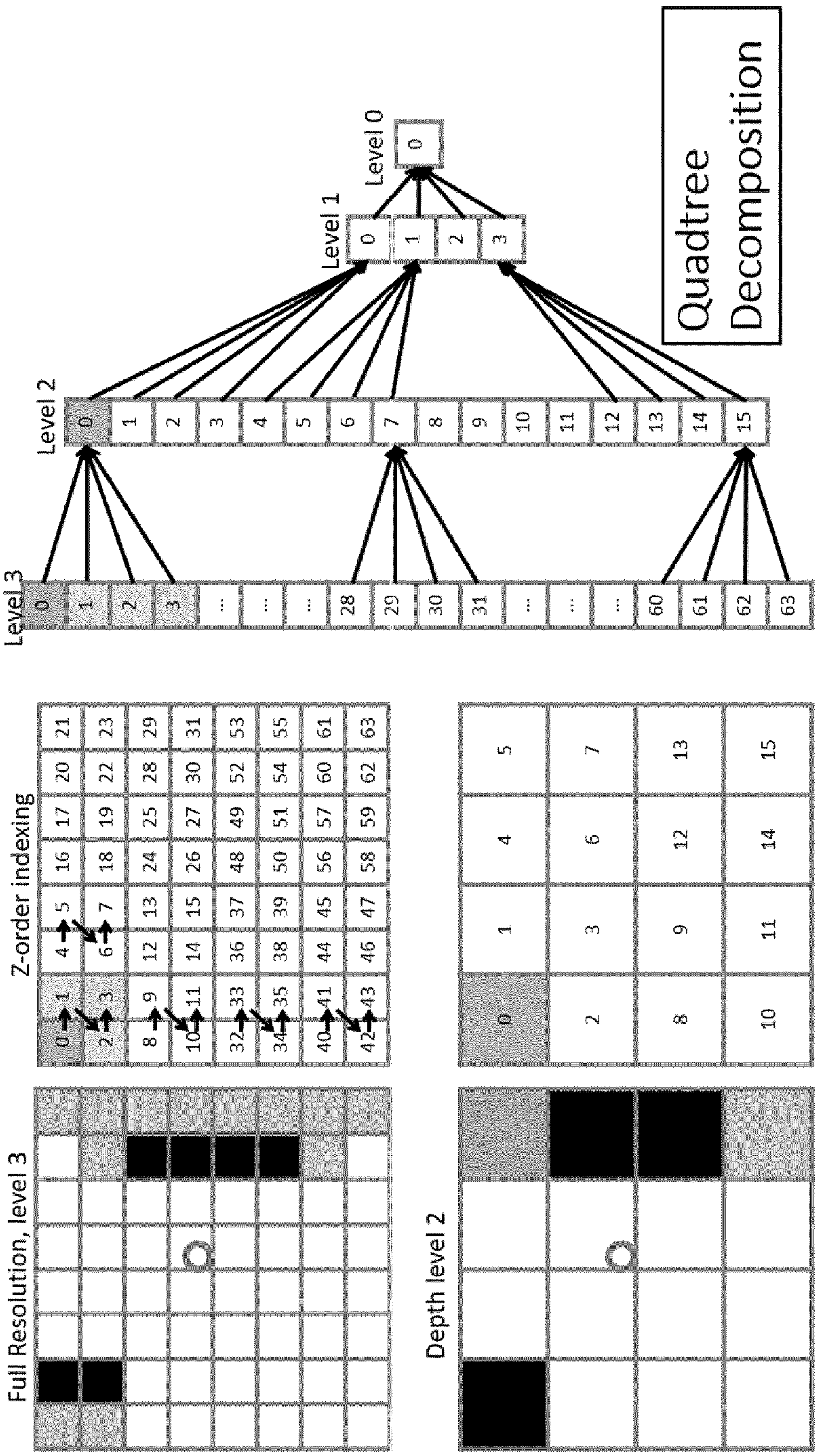
Full Resolution, level 3
Z-order indexing
Depth level 2
Level 3
Level 2
Level 1
Level 0
Quadtree Decomposition

Fig. 5

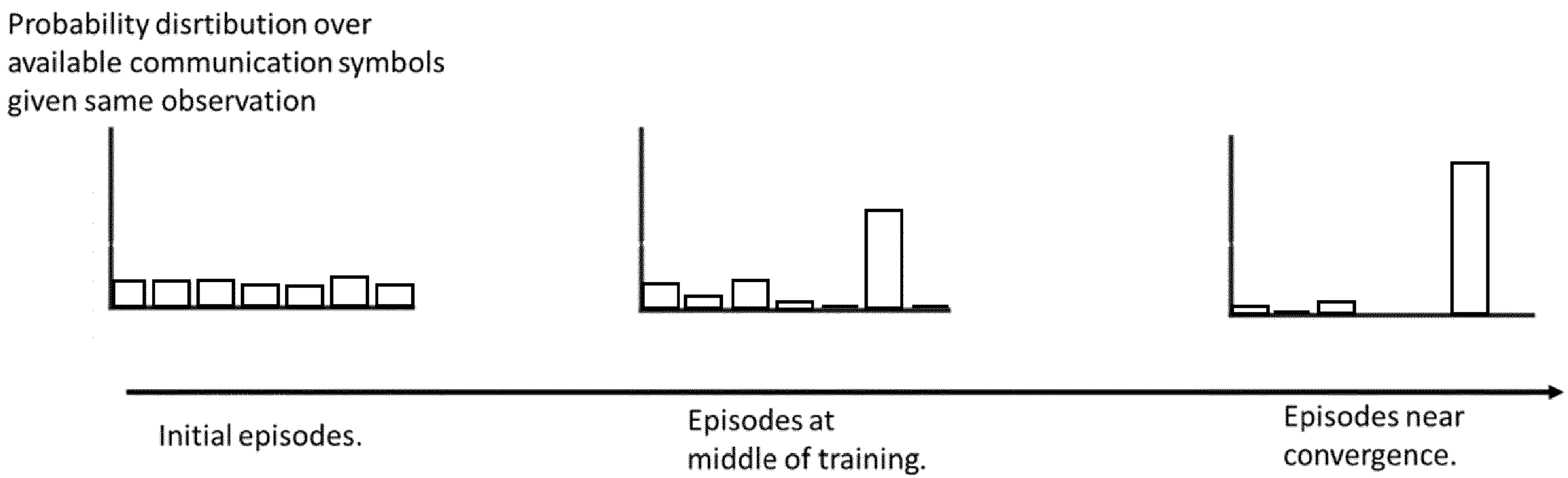
Probability disrtibution over
available communication symbols
given same observation
Initial episodes.
Episodes at
middle of training.
Episodes near
convergence.

Fig. 6

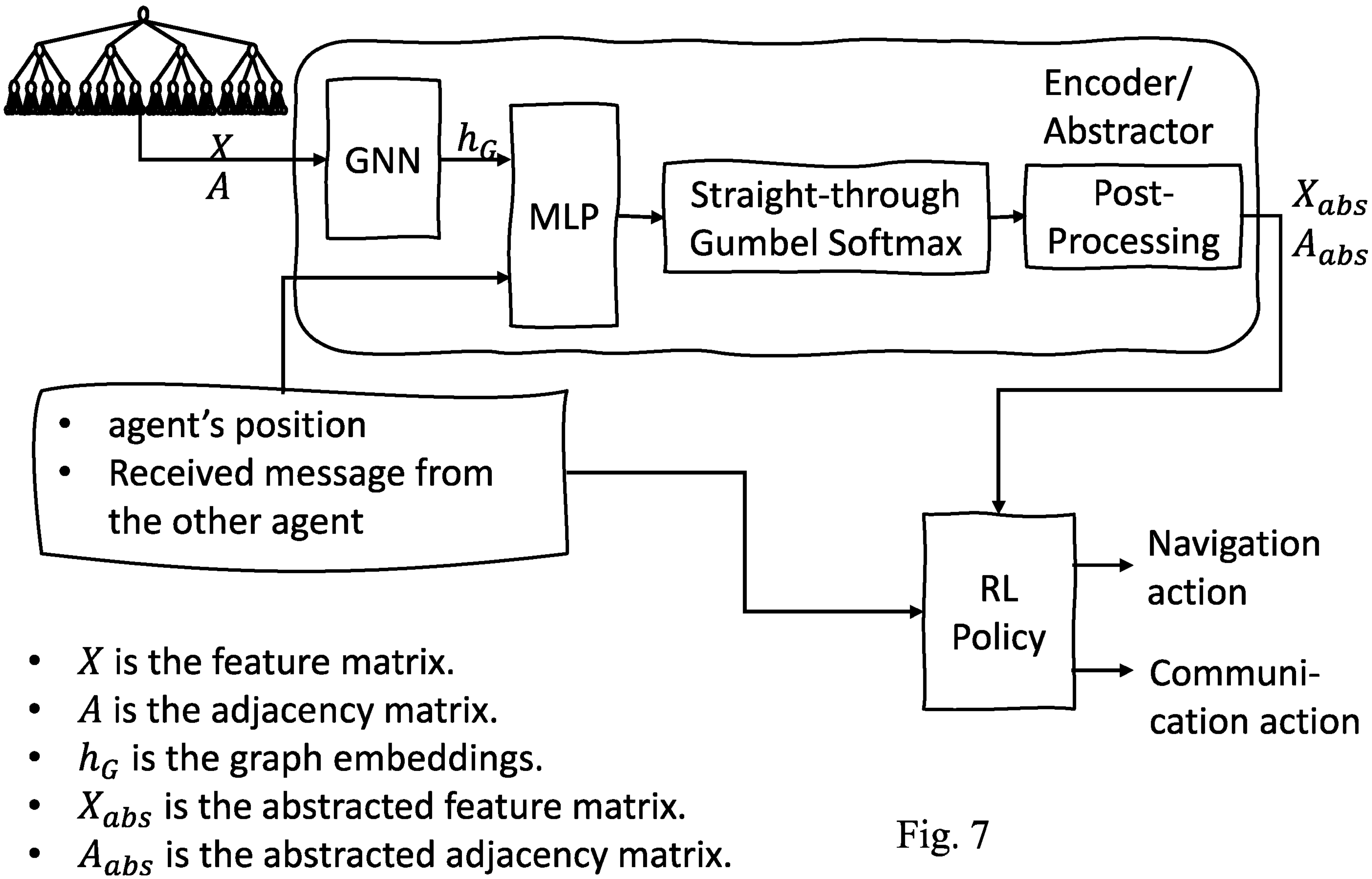
Encoder/
Abstractor
$X$
$A$
GNN
$h_G$
MLP
Straight-through
Gumbel Softmax
Post-
Processing
$X_{abs}$
$A_{abs}$
agent's position
Received message from
the other agent
RL
Policy
Navigation
action
Communi-
cation action
$X$ is the feature matrix.
$A$ is the adjacency matrix.
$h_G$ is the graph embeddings.
$X_{abs}$ is the abstracted feature matrix.
$A_{abs}$ is the abstracted adjacency matrix.

Fig. 7

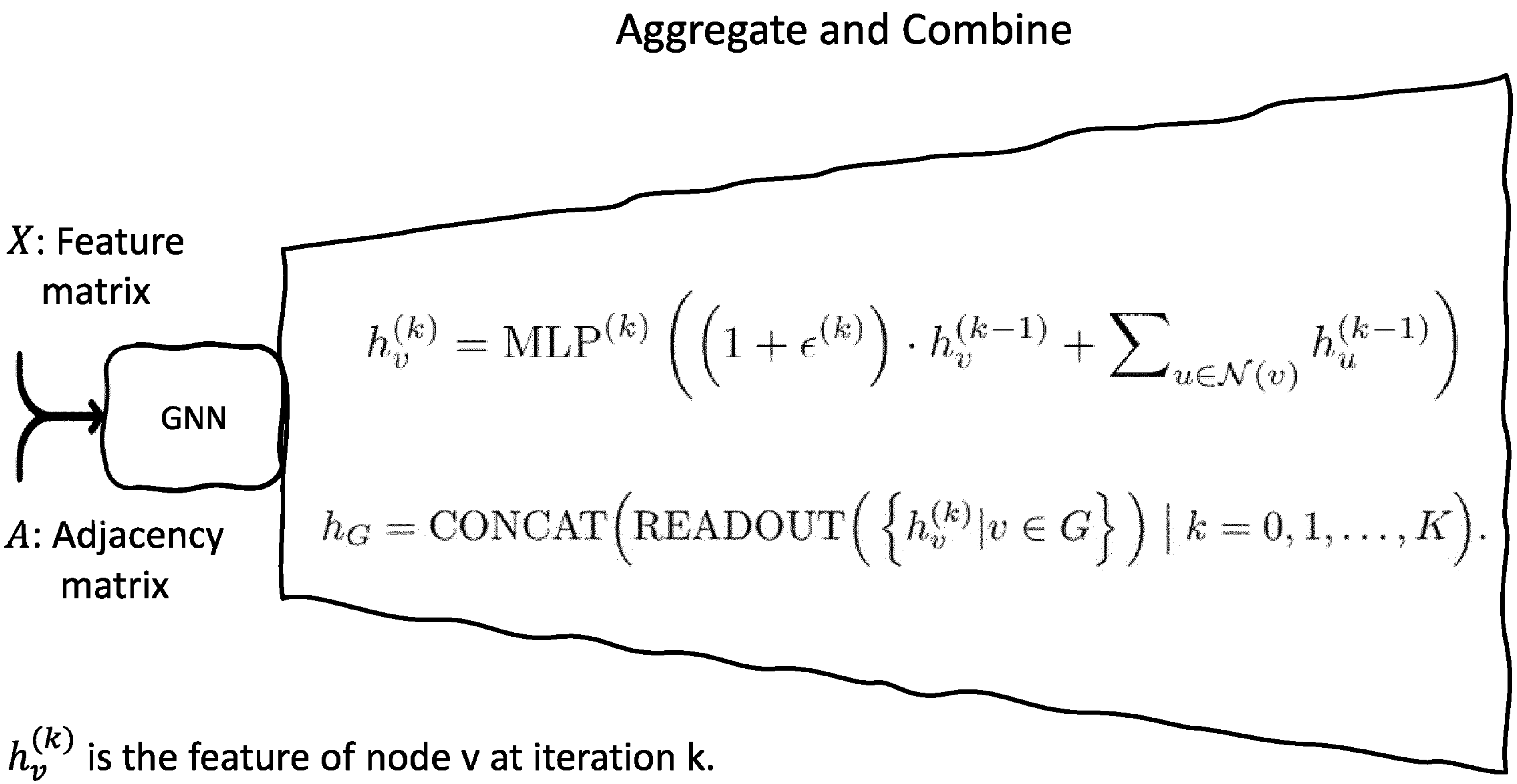


- $h_v^{(k)}$ is the feature of node v at iteration k.
- $\mathcal{N}_{(v)}$ is the set of neighbours of node v.
- $h_G$ is the graph embeddings.

Fig. 8

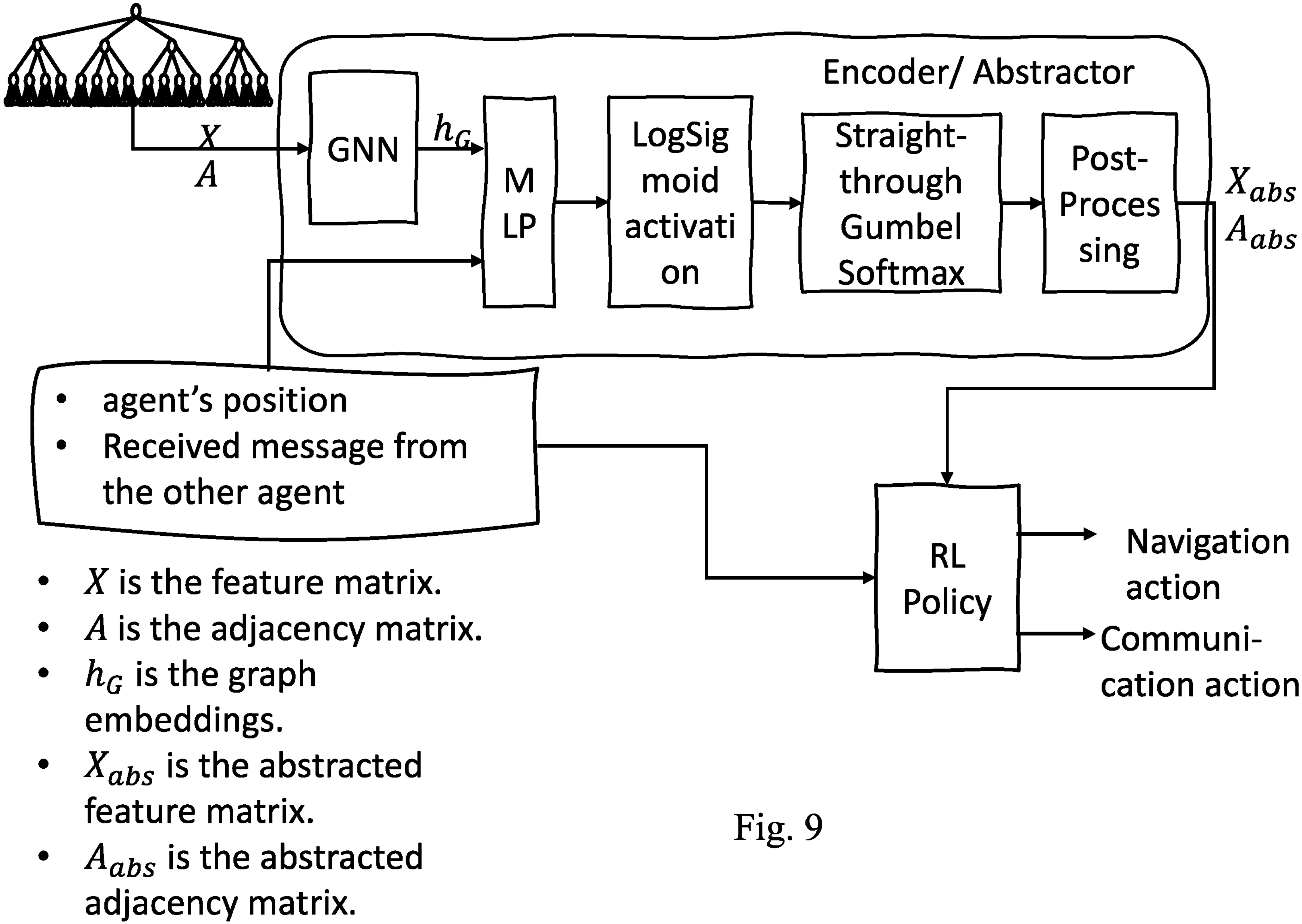
Encoder/ Abstractor
X
A
GNN
$h_G$
M
LP
LogSig
moid
activati
on
Straight-
through
Gumbel
Softmax
Post-
Proces
sing
$X_{abs}$
$A_{abs}$
agent's position
Received message from the other agent
RL
Policy
Navigation action
Communi-
cation action
$X$ is the feature matrix.
$A$ is the adjacency matrix.
$h_G$ is the graph embeddings.
$X_{abs}$ is the abstracted feature matrix.
$A_{abs}$ is the abstracted adjacency matrix.

Fig. 9

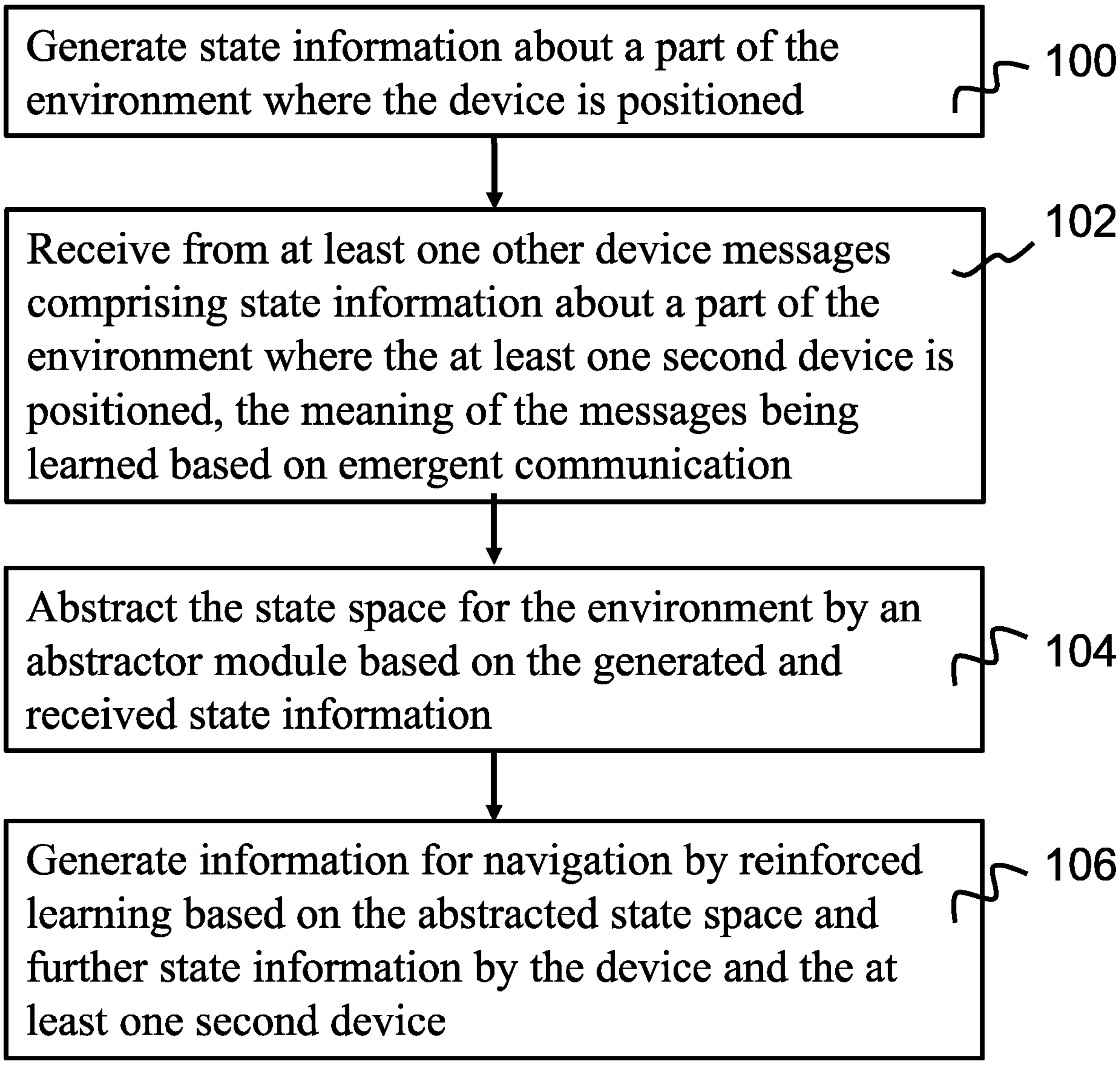
Generate state information about a part of the environment where the device is positioned
100
Receive from at least one other device messages comprising state information about a part of the environment where the at least one second device is positioned, the meaning of the messages being learned based on emergent communication
102
Abstract the state space for the environment by an abstractor module based on the generated and received state information
104
Generate information for navigation by reinforced learning based on the abstracted state space and further state information by the device and the at least one second device
106

Fig. 10

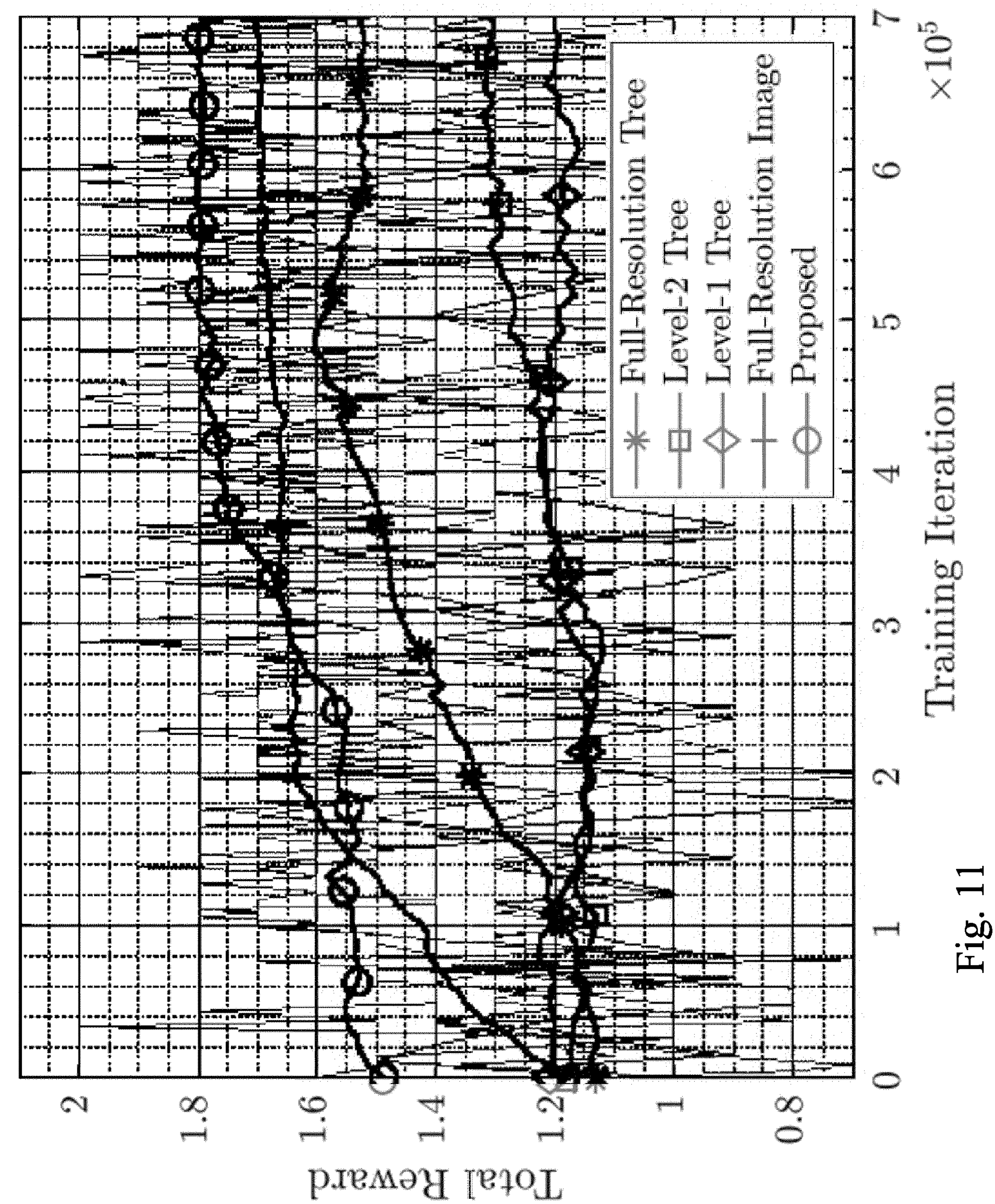
Total Reward
Training Iteration
×10^5
Full-Resolution Tree
Level-2 Tree
Level-1 Tree
Full-Resolution Image
Proposed

Fig. 11

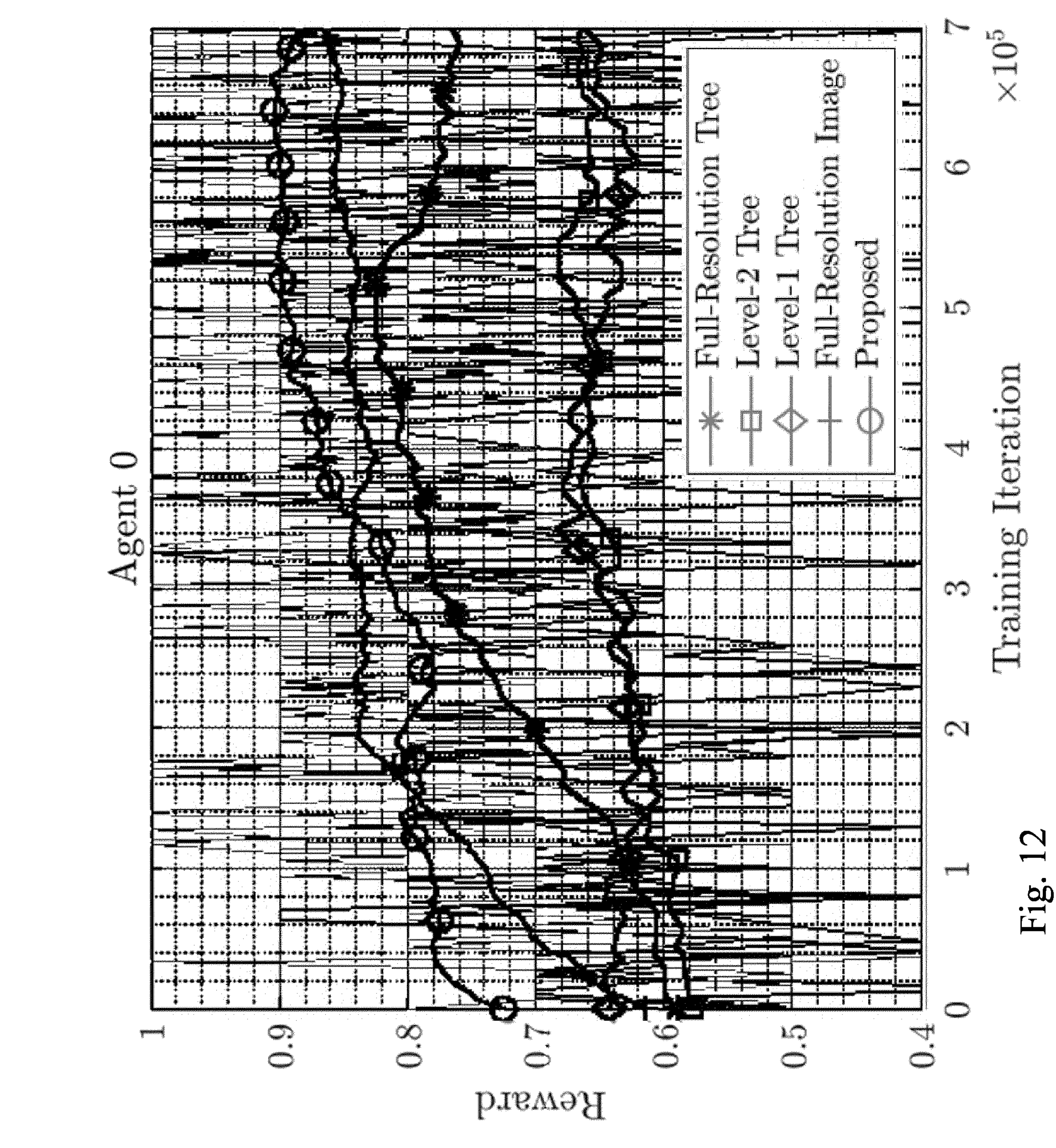
Agent 0
Reward
1
0.9
0.8
0.7
0.6
0.5
0.4
0
1
2
3
4
5
6
7
×10^5
Training Iteration
Full-Resolution Tree
Level-2 Tree
Level-1 Tree
Full-Resolution Image
Proposed

Fig. 12

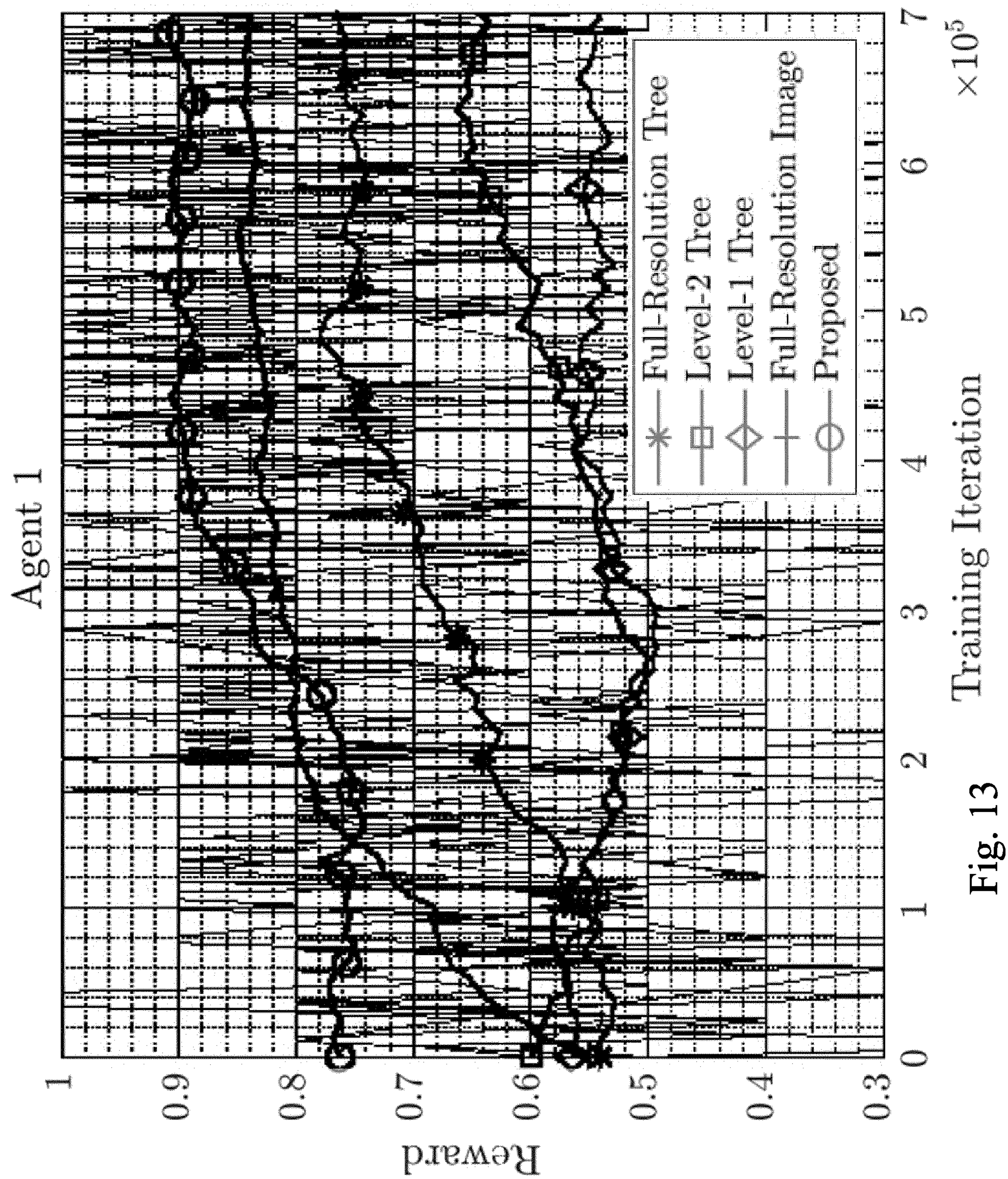
Agent 1
Reward
Training Iteration
×10^5
0
1
2
3
4
5
6
7
0.3
0.4
0.5
0.6
0.7
0.8
0.9
1
Full-Resolution Tree
Level-2 Tree
Level-1 Tree
Full-Resolution Image
Proposed

Fig. 13

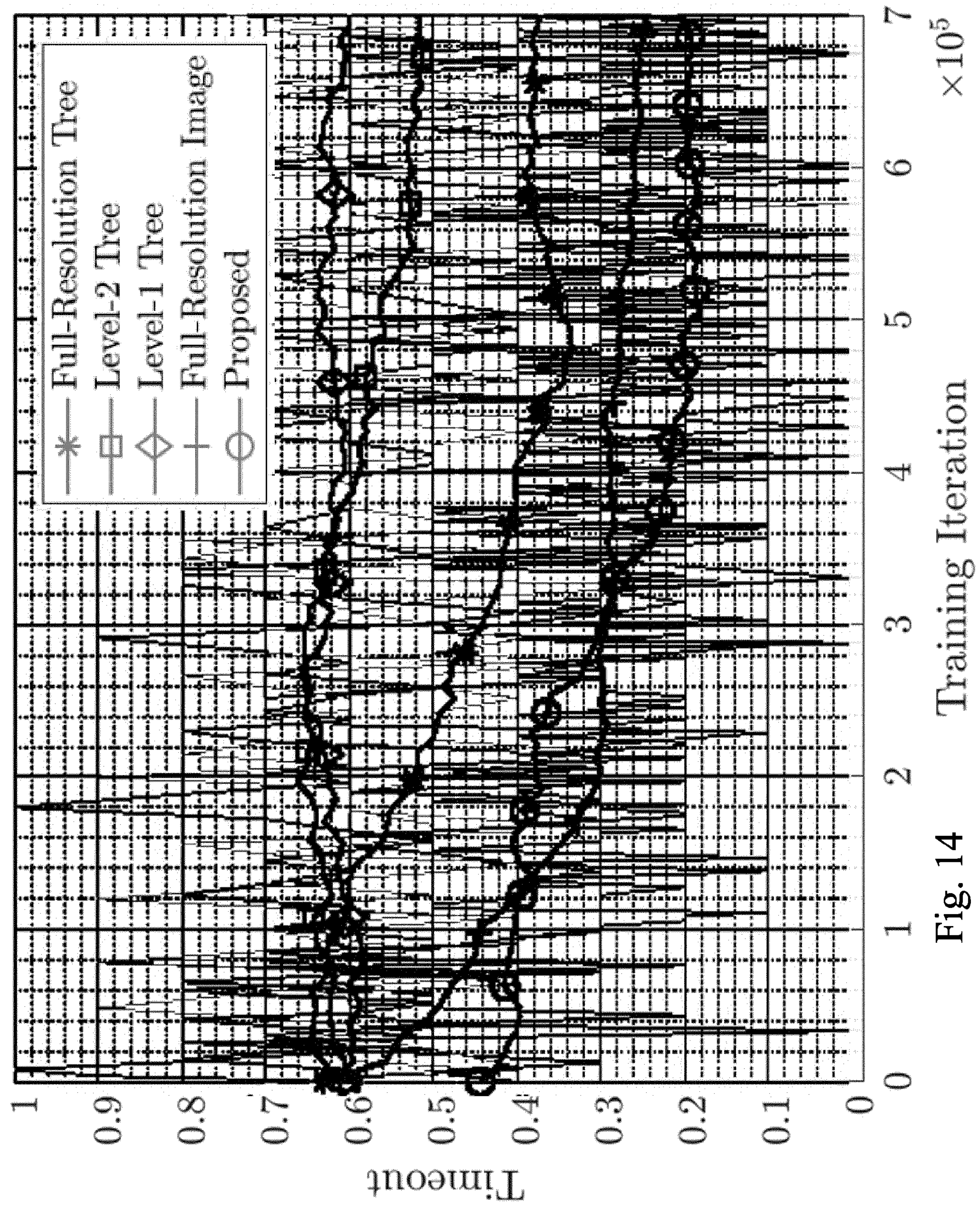
Full-Resolution Tree
Level-2 Tree
Level-1 Tree
Full-Resolution Image
Proposed
Timeout
Training Iteration
×10^5
0
0.1
0.2
0.3
0.4
0.5
0.6
0.7
0.8
0.9
1
1
2
3
4
5
6
7

Fig. 14

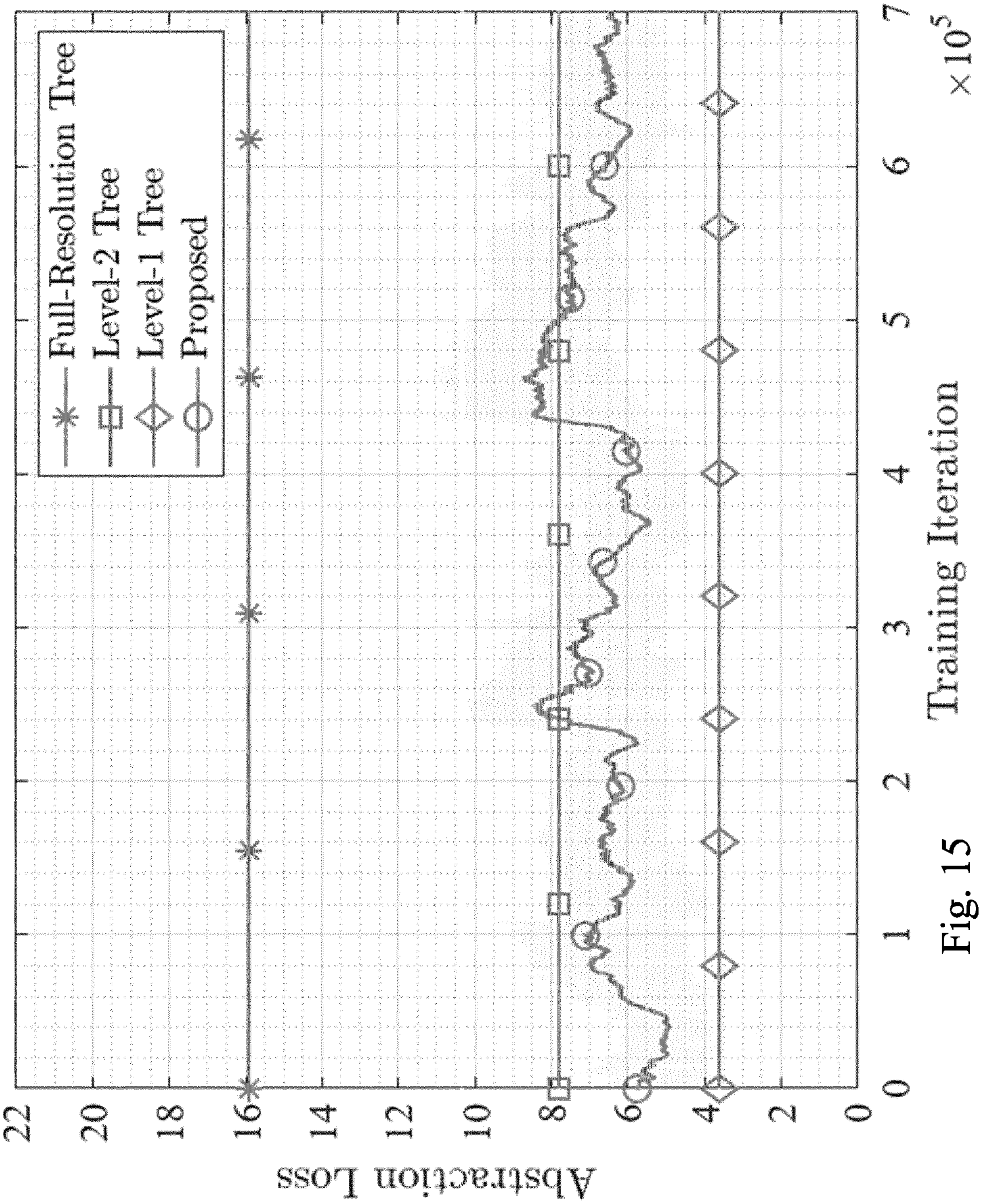
Full-Resolution Tree
Level-2 Tree
Level-1 Tree
Proposed
Abstraction Loss
Training Iteration
×10^5
0
1
2
3
4
5
6
7
0
2
4
6
8
10
12
14
16
18
20
22

Fig. 15

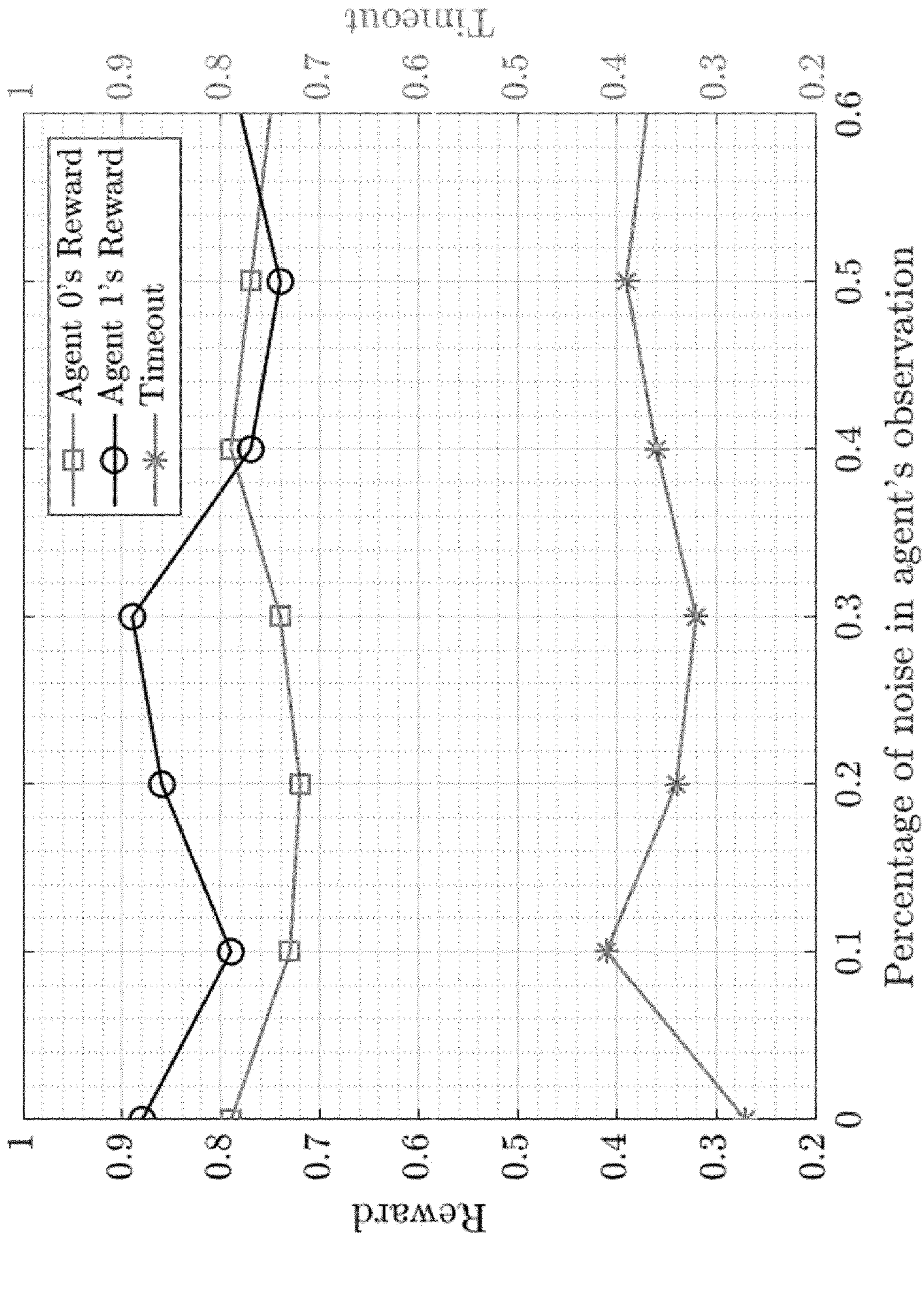
Agent 0's Reward
Agent 1's Reward
Timeout
Reward
Timeout
Percentage of noise in agent's observation
0
0.1
0.2
0.3
0.4
0.5
0.6
0.2
0.3
0.4
0.5
0.6
0.7
0.8
0.9
1

Fig. 16

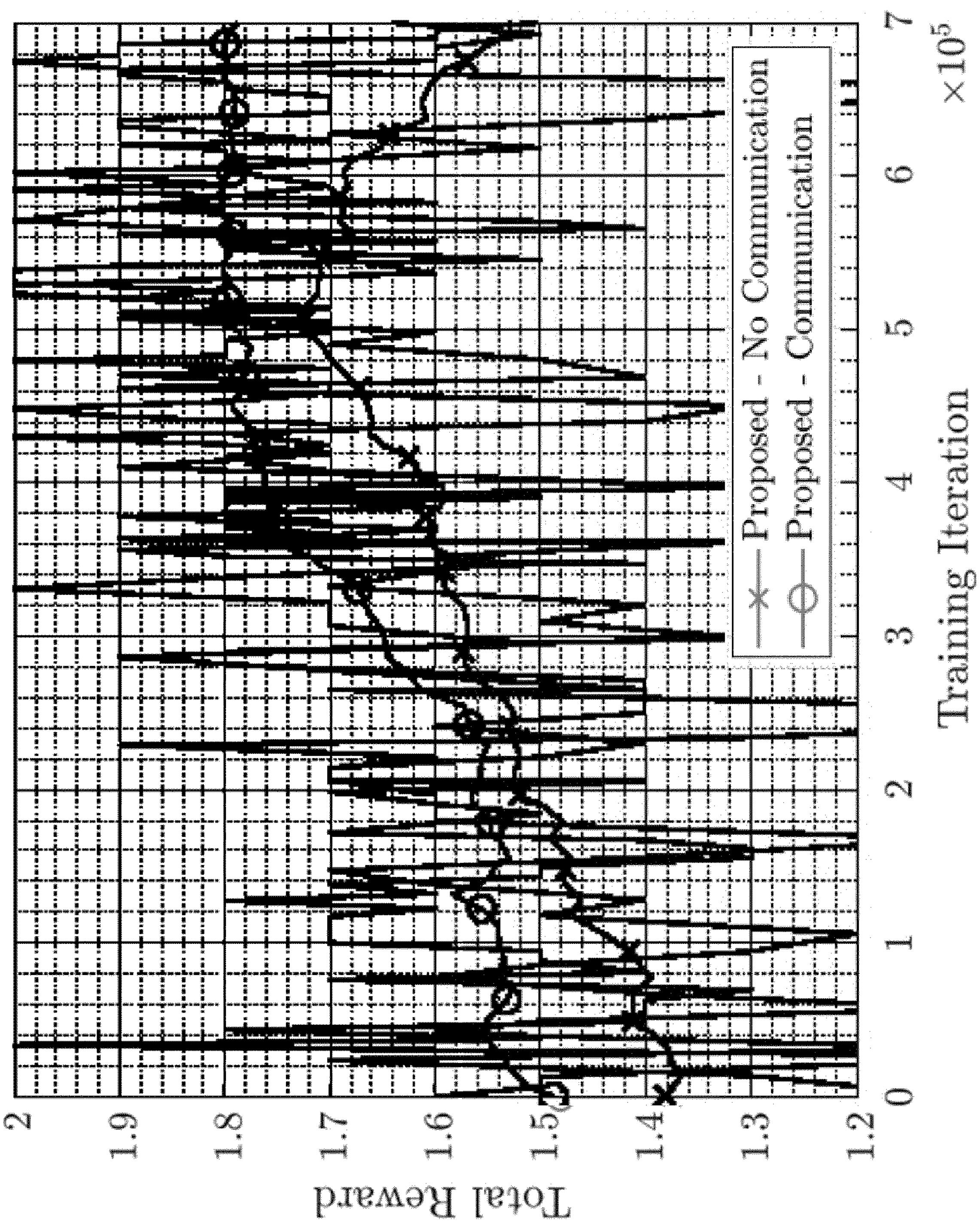
Total Reward
2
1.9
1.8
1.7
1.6
1.5
1.4
1.3
1.2
0
1
2
3
4
5
6
7
$\times 10^5$
Training Iteration
Proposed - No Communication
Proposed - Communication

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190220003 A1